(19) Europäisches Patentamt
European Patent Office
Office européen des brevets

(11) **EP 4 243 541 A1**

(12) **EUROPEAN PATENT APPLICATION**
published in accordance with Art. 153(4) EPC

(43) Date of publication:
**13.09.2023 Bulletin 2023/37**

(21) Application number: **21889603.3**

(22) Date of filing: **05.11.2021**

(51) International Patent Classification (IPC):
*H04W 72/14* (2009.01)   *H04W 72/12* (2023.01)
*H04L 1/18* (2023.01)   *H04W 52/02* (2009.01)
*H04W 76/28* (2018.01)   *H04W 4/40* (2018.01)
*H04W 92/18* (2009.01)

(52) Cooperative Patent Classification (CPC):
**H04L 1/18; H04W 4/40; H04W 52/02; H04W 72/12;
H04W 72/23; H04W 76/28; H04W 92/18;
Y02D 30/70**

(86) International application number:
**PCT/KR2021/015984**

(87) International publication number:
**WO 2022/098138 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.11.2020   KR 20200146780
30.11.2020   KR 20200163819**

(71) Applicant: **LG Electronics Inc.
Yeongdeungpo-gu
Seoul 07336 (KR)**

(72) Inventors:
• **PARK, Giwon**
  **Seoul 06772 (KR)**
• **LEE, Seungmin**
  **Seoul 06772 (KR)**
• **BACK, Seoyoung**
  **Seoul 06772 (KR)**
• **HONG, Jongwoo**
  **Seoul 06772 (KR)**

(74) Representative: **Plasseraud IP
66, rue de la Chaussée d'Antin
75440 Paris Cedex 09 (FR)**

(54) **METHOD AND DEVICE FOR SUPPORTING SIDELINK DRX ON BASIS OF MODE 1 CG RESOURCE IN NR V2X**

(57)    An embodiment proposes a method for performing wireless communication by a first device. The method may comprise a step of receiving information related to a configured grant (CG) from a base station, the information related to the CG including information related to a hybrid automatic repeat request (HARQ) process ID for the CG, and period information of a resource related to the CG, and transmitting a first transport block to a second device at a first period on the basis of the period information and a first HARQ process ID. For example, on the basis that transmission of the first transport block fails, and the first HARQ process ID and a second HARQ process ID are the same, a discontinuous reception (DRX) timer related to the first transport block may be stopped at a second period related to the second HARQ process ID. For example, DRX related to the first transport block may include DRX between the first device and the base station and DRX between the first device and the second device.

FIG. 10

**Description**

**TECHNICAL FIELD**

This disclosure relates to a wireless communication system.

**BACKGROUND ART**

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

**DISCLOSURE**

**TECHNICAL PROBLEM**

Meanwhile, in sidelink communication, a power saving operation of a user equipment (UE) (e.g., a pedestrian UE) may be supported. For example, after passing a set of periods for configured grant (CG) resources allocated from a base station to the UE, a collision may occur between a hybrid automatic repeat request (HARQ) process ID mapped to a CG resource and a HARQ process ID mapped to a dynamic grant (DG) resource for retransmission.

In this case, for example, a retransmission transport block (TB) may be flushed from a HARQ buffer (i.e., the HARQ buffer mapped to the HARQ process ID in which the collision occurs). In this case, it is necessary to define how the UE should perform a discontinuous (DRX) timer operation.

**TECHNICAL SOLUTION**

Based on an embodiment of the present disclosure, a method for performing wireless communication by a first device may be provided. The method may comprise: receiving, from a base station, information related to configured grant (CG), the information related to the CG including information related to a hybrid automatic repeat request (HARQ) process ID for the CG and period information of resources related to the CG; and transmitting, to a second device, a first transport block in a first period, based on the period information and the first HARQ process ID. For example, based on that the transmission of the first transport block is failed and the first HARQ process ID is same as a second HARQ process ID, a discontinuous reception (DRX) timer related to the first transport block may be stopped in a second period related to the second HARQ process ID. For example, DRX related to the first transport block may include DRX between the first device and the base station and DRX between the first device and the second device.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: receive, from a base station, information related to configured grant (CG), the information related to the CG including information related to a hybrid automatic repeat request (HARQ) process ID for the CG and period information of resources related to the CG; and transmit, to a second device, a first transport block in a first period, based on the period information and the first HARQ process ID. For example, based on that the transmission of the first transport block is failed and the first HARQ process ID is same as a second HARQ process ID, a discontinuous reception (DRX) timer related to the first transport block may be stopped in a second period related to the second HARQ process ID. For example, DRX related to the first transport block may include DRX between the first device and the base station and DRX between the first device and the second device.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: receive, from a base station, information related to configured grant (CG), the information related to the CG including information related to a hybrid automatic repeat request (HARQ) process ID for the CG and period information of resources related to the CG; and transmit, to a second UE, a first transport block in a first period, based on the period information and the first HARQ process ID. For example, based on that the transmission of the first transport block is failed and the first HARQ process ID is same as a second HARQ process ID, a discontinuous reception (DRX) timer related to the first transport block may be stopped in a second period related to the second HARQ process ID. For example, DRX related to the first transport block may include DRX between the first UE and the base station and DRX between the first UE and the second UE.

Based on an embodiment of the present disclosure, a non-transitory computer-readable storage medium storing instructions may be provided. For example, the instructions, when executed, may cause a first device to: receive, from a base station, information related to configured grant (CG), the information related to the CG including information related to a hybrid automatic repeat request (HARQ) process ID for the CG and period information of resources related to the CG; and transmit, to a second device, a first transport block in a first period, based on the period information and the first HARQ process ID. For example, based on that the transmission of the first transport block is failed and the first HARQ process ID is same as a second HARQ process ID, a discontinuous reception (DRX) timer related to the first transport block may be stopped in a second period related to the second HARQ process ID. For example, DRX related to the first transport block may include DRX between the first device and the base station and DRX between the first device and the second device.

Based on an embodiment of the present disclosure, a method for performing wireless communication by a second device may be provided. The method may comprise: receiving, from a first device, a first transport block in a first period. For example, information related to configured grant (CG) may be received by the first device from a base station. For example, the information related to the CG may include information related to a hybrid automatic repeat request (HARQ) process ID for the CG and period information of resources related to the CG. For example, based on the period information and a first HARQ process ID, the first transport block may be received in the first period. For example, based on that transmission of the first transport block is failed and the first HARQ process ID is same as a second HARQ process ID, a discontinuous reception (DRX) timer related to the first transport block may be stopped in a second period related to the second HARQ process ID. For example, DRX related to the first transport block may include DRX between the first device and the base station and DRX between the first device and the second device.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: receive, from a first device, a first transport block in a first period. For example, information related to configured grant (CG) may be received by the first device from a base station. For example, the information related to the CG may include information related to a hybrid automatic repeat request (HARQ) process ID for the CG and period information of resources related to the CG. For example, based on the period information and a first HARQ process ID, the first transport block may be received in the first period. For example, based on that transmission of the first transport block is failed and the first HARQ process ID is same as a second HARQ process ID, a discontinuous reception (DRX) timer related to the first transport block may be stopped in a second period related to the second HARQ process ID. For example, DRX related to the first transport block may include DRX between the first device and the base station and DRX between the first device and the second device.

## ADVANTAGEOUS EFFECTS

If a hybrid automatic repeat request (HARQ) process ID related to a retransmission transport block (TB) and a HARQ process ID assigned for new TB transmission are the same, the UE can obtain a power saving gain by stopping a discontinuous reception (DRX) timer related to the retransmission TB.

## BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.

FIG. 5 shows an example of a BWP, based on an embodiment of the present disclosure.

FIG. 6 shows a procedure of performing V2X or SL communication by a UE based on a transmission mode, based on an embodiment of the present disclosure.

FIG. 7 shows three cast types, based on an embodiment of the present disclosure.

FIG. 8 shows an example of a collision between HARQ process IDs, based on an embodiment of the present disclosure.

FIG. 9 shows an operation of a Uu DRX timer or an SL DR DRX timer for a sidelink operation, based on an embodiment of the present disclosure.

FIG. 10 shows a procedure in which a transmitting UE stops a timer related to a first transport block and transmits a second transport block, based on an embodiment of the present disclosure.

FIG. 11 shows an example in which a transmitting UE stops a timer related to a first transport block and transmits a second transport block, based on an embodiment of the present disclosure.

FIG. 12 shows a method for stopping a timer related to a first transport block by a first device, based on an embodiment of the present disclosure.

FIG. 13 shows a method for receiving, by a second device, a second transport block from a first device, based on an embodiment of the present disclosure.

FIG. 14 shows a communication system 1, based on an embodiment of the present disclosure.

FIG. 15 shows wireless devices, based on an embodiment of the present disclosure.

FIG. 16 shows a signal process circuit for a transmission signal, based on an embodiment of the present disclosure.

FIG. 17 shows another example of a wireless device, based on an embodiment of the present disclosure.

FIG. 18 shows a hand-held device, based on an embodiment of the present disclosure.

FIG. 19 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in the present disclosure, reference may be made to a wireless communication standard document published before the present disclosure is filed. For example, the documents in Table 1 below may be referred to.

[Table 1]

| 3GPP LTE | 3GPP NR (e.g. 5G) |
|---|---|
| - 3GPP TS 36.211: Physical channels and modulation | - 3GPP TS 38.211: Physical channels and modulation |
| - 3GPP TS 36.212: Multiplexing and channel coding | - 3GPP TS 38.212: Multiplexing and channel coding |
| - 3GPP TS 36.213: Physical layer procedures | - 3GPP TS 38.213: Physical layer procedures for control |
| - 3GPP TS 36.214: Physical layer; Measurements | - 3GPP TS 38.214: Physical layer procedures for data |
| - 3GPP TS 36.300: Overall description | |
| - 3GPP TS 36.304: User Equipment (UE) procedures in idle mode | - 3GPP TS 38.215: Physical layer measurements |
| - 3GPP TS 36.314: Layer 2 - Measurements | - 3GPP TS 38.300: Overall description |
| - 3GPP TS 36.321: Medium Access Control (MAC) protocol | - 3GPP TS 38.304: User Equipment (UE) procedures in idle mode and in RRC inactive state |
| - 3GPP TS 36.322: Radio Link Control (RLC) protocol | - 3GPP TS 38.321: Medium Access Control (MAC) protocol |
| - 3GPP TS 36.323: Packet Data Convergence Protocol (PDCP) | - 3GPP TS 38.322: Radio Link Control (RLC) protocol |
| - 3GPP TS 36.331: Radio Resource Control (RRC) protocol | - 3GPP TS 38.323: Packet Data Convergence Protocol (PDCP) |
| | - 3GPP TS 38 331: Radio Resource Control (RRC) protocol |
| | - 3GPP TS 37.324: Service Data Adaptation Protocol (SDAP) |
| | - 3GPP TS 37.340: Multi-connectivity, Overall description |

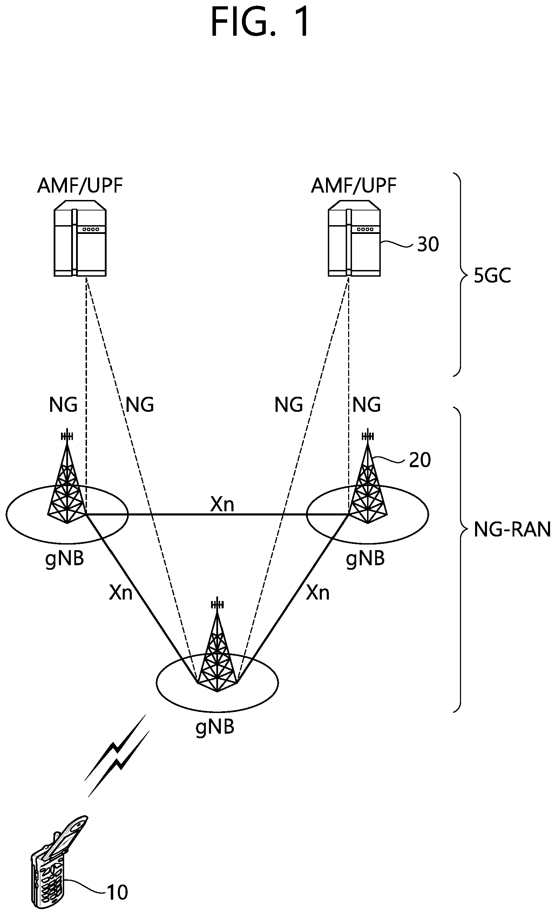

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

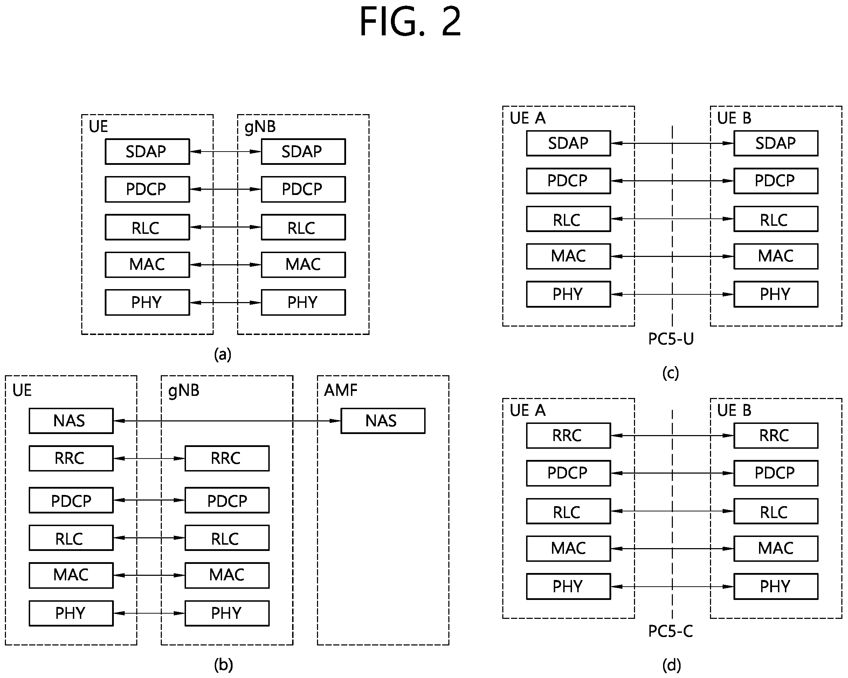

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

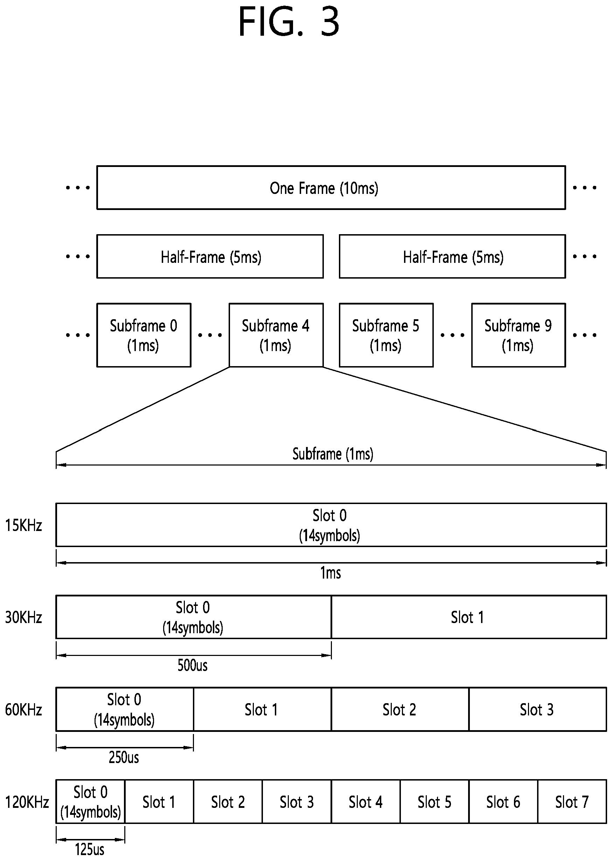

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 3 shows an example of a number of symbols per slot, a number of slots per frame, and a number of slots per subframe based on the SCS, in a case where an extended CP is used.

[Table 3]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 4. Among the frequency ranges that are used in an NR system, FR1 may mean a "sub 6GHz range", and FR2 may mean an "above 6GHz range" and may also be referred to as a millimeter wave (mmW).

[Table 4]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 5, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 5]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

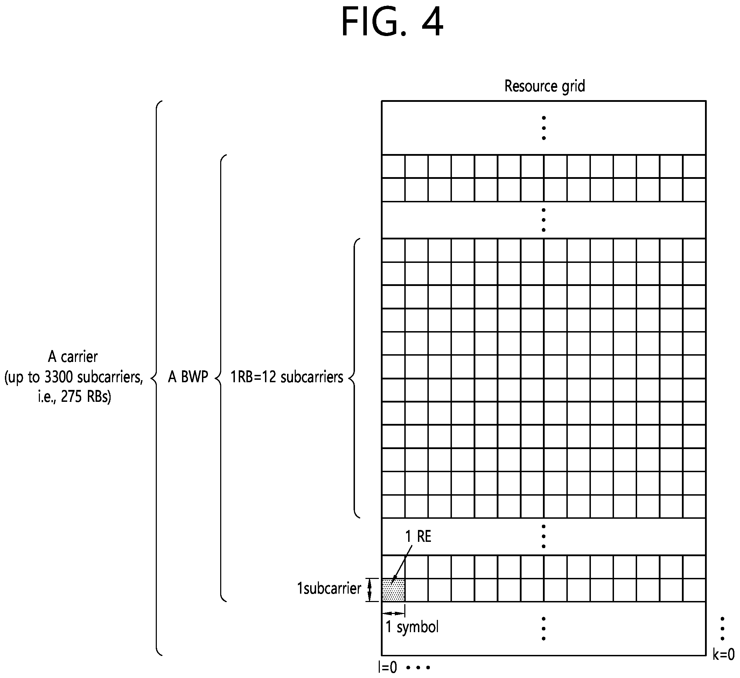

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

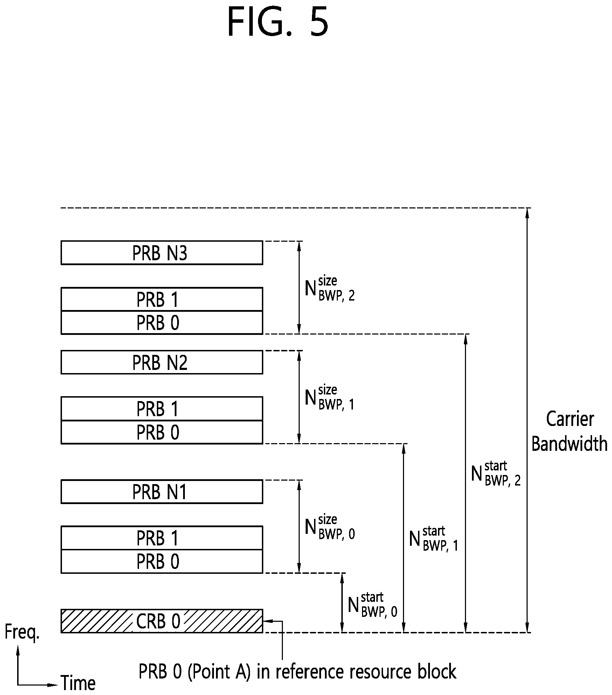

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

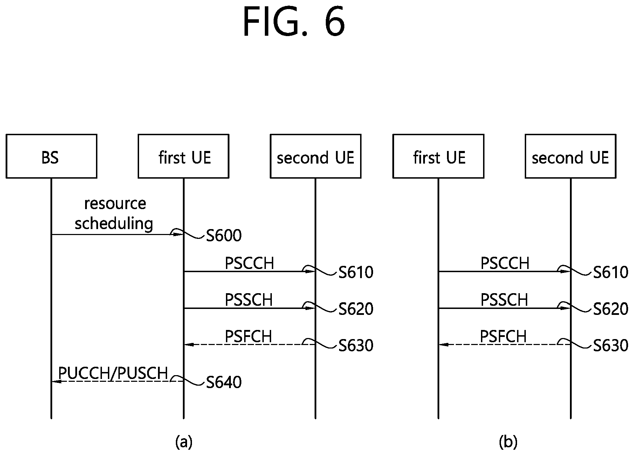

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1. Table 6 shows an example of a DCI for SL scheduling.

[Table 6]

| |
|---|
| 7.3.1.4.1 Format 3_0<br>DCI format 3_0 is used for scheduling of NR PSCCH and NR PSSCH in one cell.<br>The following information is transmitted by means of the DCI format 3_0 with CRC scrambled by SL-RNTI or SL-CS-RNTI:<br>  - Resource pool index $-\lceil \log_2 I \rceil$ bits, where $I$ is the number of resource pools for transmission configured by the higher layer parameter *sl-TxPoolScheduling*.<br>  - Time gap – 3 bits determined by higher layer parameter *sl-DCI-ToSL-Trans,* as defined in clause 8.1.2.1 of [6, TS 38.214]<br>  - HARQ process number – 4 bits as defined in clause 16.4 of [5, TS 38.213]<br>  - New data indicator – 1 bit as defined in clause 16.4 of [5, TS 38.213]<br>  - Lowest index of the subchannel allocation to the initial transmission $-\lceil \log_2 (N^{SL}_{subChannel}) \rceil$ bits as defined in clause 8.1.2.2 of [6, TS 38.214]<br>  - SCI format 1-A fields according to clause 8.3.1.1:<br>    - Frequency resource assignment.<br>    - Time resource assignment.<br>  - PSFCH-to-HARQ feedback timing indicator $-\lceil \log_2 N_{fb\_timing} \rceil$ bits, where $N_{fb\_timing}$ is the number of entries in the higher layer parameter *sl-PSFCH-ToPUCCH,* as defined in clause 16.5 of [5, TS 38.213]<br>  - PUCCH resource indicator – 3 bits as defined in clause 16.5 of [5, TS 38.213].<br>  - Configuration index – 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.<br>  - Counter sidelink assignment index – 2 bits |

| |
|---|
|   - 2 bits as defined in clause 16.5.2 of [5, TS 38.213] if the UE is configured with *pdsch-HARQ-ACK-Codebook = dynamic*<br>  - 2 bits as defined in clause 16.5.1 of [5, TS 38.213] if the UE is configured with *pdsch-HARQ-ACK-Codebook = semi-static*<br>  - Padding bits, if required |

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B. Table 7 shows an example of the 1st-stage SCI format.

[Table 7]

---

**3GPP TS 38.212**

8.3.1.1    SCI format 1-A

SCI format 1-A is used for the scheduling of PSSCH and 2nd-stage-SCI on PSSCH

The following information is transmitted by means of the SCI format 1-A:

- Priority – 3 bits as specified in clause 5.4.3.3 of [12, TS 23.287] and clause 5.22.1.3.1 of [8, TS 38.321].

---

- Frequency resource assignment – $\left\lceil \log_2(\frac{N_{subChannel}^{SL}(N_{subChannel}^{SL} + 1)}{2}) \right\rceil$ bits when the value of the higher layer parameter *sl-MaxNumPerReserve* is configured to 2; otherwise $\left\lceil \log_2(\frac{N_{subChannel}^{SL}(N_{subChannel}^{SL} + 1)(2N_{subChannel}^{SL} + 1)}{6}) \right\rceil$ bits when the value of the higher layer parameter *sl-MaxNumPerReserve* is configured to 3, as defined in clause 8.1.2.2 of [6, TS 38.214].

- Time resource assignment – 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.2.1 of [6, TS 38.214].

- Resource reservation period –$\left\lceil \log_2 N_{rsv\_period} \right\rceil$ bits as defined in clause 8.1.4 of [6, TS 38.214], where $N_{rsv\_period}$ is the number of entries in the higher layer parameter *sl-ResourceReservePeriodList*, if higher layer parameter *sl-MultiReserveResource* is configured; 0 bit otherwise.

- DMRS pattern – $\left\lceil \log_2 N_{pattern} \right\rceil$ bits as defined in clause 8.4.1.1.2 of [4, TS 38.211], where $N_{pattern}$ is the number of DMRS patterns configured by higher layer parameter *sl-PSSCH-DMRS-TimePatternList*.

- 2nd-stage SCI format – 2 bits as defined in Table 8.3.1.1-1.

- Beta_offset indicator – 2 bits as provided by higher layer parameter *sl-BetaOffsets2ndSCI* and Table 8.3.1.1-2.

- Number of DMRS port – 1 bit as defined in Table 8.3.1.1-3.

- Modulation and coding scheme – 5 bits as defined in clause 8.1.3 of [6, TS 38.214].

- Additional MCS table indicator – as defined in clause 8.1.3.1 of [6, TS 38.214]: 1 bit if one MCS table is configured by higher layer parameter *sl-Additional-MCS-Table*; 2 bits if two MCS tables are configured by higher layer parameter *sl- Additional-MCS-Table*; 0 bit otherwise.

- PSFCH overhead indication – 1 bit as defined clause 8.1.3.2 of [6, TS 38.214] if higher layer parameter *sl-PSFCH-Period* = 2 or 4; 0 bit otherwise.

- Reserved – a number of bits as determined by higher layer parameter *sl-NumReservedBits*, with value set to zero.

**Table 8.3.1.1-1: 2nd-stage SCI formats**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

---

Table 8 shows an example of the 2nd-stage SCI format.

[Table 8]

| 3GPP TS 38.212 |
|---|

8.4.1.1　SCI format 2-A

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number – 4 bits as defined in clause 16.4 of [5, TS 38.213].
- New data indicator – 1 bit as defined in clause 16.4 of [5, TS 38.213].
- Redundancy version – 2 bits as defined in clause 16.4 of [6, TS 38.214].
- Source ID – 8 bits as defined in clause 8.1 of [6, TS 38.214].
- Destination ID – 16 bits as defined in clause 8.1 of [6, TS 38.214].
- HARQ feedback enabled/disabled indicator – 1 bit as defined in clause 16.3 of [5, TS 38.213].
- Cast type indicator – 2 bits as defined in Table 8.4.1.1-1.
- CSI request – 1 bit as defined in clause 8.2.1 of [6, TS 38.214].

**Table 8.4.1.1-1: Cast type indicator**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

8.4.1.2　　　SCI format 2-B

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number – 4 bits as defined in clause 16.4 of [5, TS 38.213].
- New data indicator – 1 bit as defined in clause 16.4 of [5, TS 38.213].
- Redundancy version – 2 bits as defined in clause 16.4 of [6, TS 38.214].
- Source ID – 8 bits as defined in clause 8.1 of [6, TS 38.214].
- Destination ID – 16 bits as defined in clause 8.1 of [6, TS 38.214].
- HARQ feedback enabled/disabled indicator – 1 bit as defined in clause 16.3 of [5, TS 38.213].
- Zone ID – 12 bits as defined in clause 5.8.11 of [9, TS 38.331].
- Communication range requirement – 4 bits determined by higher layer parameter *sl-ZoneConfigMCR-Index*.

Referring to (a) or (b) of FIG. 6, in step S630, the first UE may receive the PSFCH based on Table 9 and Table 10. For example, the first UE and the second UE may determine a PSFCH resource based on Table 9 and Table 10, and the second UE may transmit HARQ feedback to the first UE using the PSFCH resource.

[Table 9]

16.3 UE procedure for reporting HARQ-ACK on sidelink

A UE can be indicated by an SCI format scheduling a PSSCH reception, in one or more sub-channels from a number of $N_{\text{subch}}^{\text{PSSCH}}$ sub-channels, to transmit a PSFCH with HARQ-ACK information in response to the PSSCH reception. The UE provides HARQ-ACK information that includes ACK or NACK, or only NACK. A UE can be provided, by *sl-PSFCH-Period-r16,* a number of slots in a resource pool for a period of PSFCH transmission occasion resources. If the number is zero, PSFCH transmissions from the UE in the resource pool are disabled.

A UE expects that a slot $t'^{SL}_k$ $(0 \le k < T'_{max})$ $(0 \le k < T'_{max})$ has a

PSFCH transmission occasion resource if $k$ mod $N_{\text{PSSCH}}^{\widetilde{\text{PSFCH}}} = 0$ , where

$t'^{SL}_k$ is defined in [6, TS 38.214], and $T'_{max}$ is a number of slots that belong to the resource pool within 10240 msec according to [6, TS 38.214], and

$N_{\text{PSSCH}}^{\text{PSFCH}}$ is provided by *sl-PSFCH-Period-r16.*

A UE may be indicated by higher layers to not transmit a PSFCH in response to a PSSCH reception [11, TS 38.321].

If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH-r16,* of the resource pool after a last slot of the PSSCH reception.

A UE is provided by *sl-PSFCH-RB-Set-r16* a set of $M_{\text{PRB, set}}^{\text{PSFCH}}$ PRBs in a resource pool for PSFCH transmission in a PRB of the resource pool. For a number of $N_{\text{subch}}$ sub-channels for the resource pool, provided by *sl-NumSubchannel,* and a number of PSSCH slots associated with a PSFCH slot that is less than or equal to $N_{\text{PSSCH}}^{\text{PSFCH}}$ , the UE allocates the

$$\left[ \left(i + j \cdot N_{\text{PSSCH}}^{\text{PSFCH}}\right) \cdot M_{\text{subch, slot}}^{\text{PSFCH}}, \quad \left(i + 1 + j \cdot N_{\text{PSSCH}}^{\text{PSFCH}}\right) \cdot M_{\text{subch, slot}}^{\text{PSFCH}} - 1 \right]$$

PRBs from the $M_{\text{PRB, set}}^{\text{PSFCH}}$ PRBs to slot $i$ among the PSSCH slots associated with the PSFCH slot and sub-channel $j,$

where $M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right), \ 0 \le i < N_{\text{PSSCH}}^{\text{PSFCH}}, \ 0 \le j < N_{\text{subch}}$ and the allocation starts in an ascending order of $i$ and continues in an ascending order of $j$. The UE expects that $M_{\text{PRB, set}}^{\text{PSFCH}}$ is a multiple of

$N_{\text{subch}} \cdot N_{\text{PSSCH}}^{\widetilde{\text{PSFCH}}}$ .

A UE determines a number of PSFCH resources available for multiplexing HARQ-ACK information in a PSFCH

transmission as $R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$ where $N_{\text{CS}}^{\widetilde{\text{PSFCH}}}$ is a number of cyclic shift PRB, pairs for the resource pool and, based on an indication by higher layers,

- $N_{\text{type}}^{\text{PSFCH}} = 1$ and the $M_{\text{subch, slot}}^{\text{PSFCH}}$ PRBs are associated with the starting sub-channel of the corresponding PSSCH

(continued)

| 16.3 UE procedure for reporting HARQ-ACK on sidelink |
|---|

- $N_{\text{type}}^{\text{PSFCH}} = N_{\text{subch}}^{\text{PSSCH}}$ and the $N_{\text{subch}}^{\text{PSSCH}} \cdot M_{\text{subch, slot}}^{\text{PSFCH}}$ PRBs are associated with one or more sub-channels from the $N_{\text{subch}}^{\text{PSSCH}}$ sub-channels of the corresponding PSSCH

[Table 10]

The PSFCH resources are first indexed according to an ascending order of the PRB index, from the $N_{\text{type}}^{\text{PSFCH}} \cdot M_{\text{subch, slot}}^{\text{PSFCH}}$ PRBs, and then according to an ascending order of the cyclic shift pair index from the $N_{\text{CS}}^{\text{PSFCH}}$ cyclic shift pairs.

A UE determines an index of a PSFCH resource for a PSFCH transmission in response to a PSSCH reception as $(P_{\text{ID}} + M_{\text{ID}}) mod R_{\text{PRB, CS}}^{\text{PSFCH}}$ where $P_{\text{ID}}$ is a physical layer source ID provided by SCI format 2-A or 2-B [5, TS 38.212] scheduling the PSSCH reception, and $M_{\text{ID}}$ is the identity of the UE receiving the PSSCH as indicated by higher layers if the UE detects a SCI format 2-A with Cast type indicator field value of "01"; otherwise, $M_{\text{ID}}$ is zero.

A UE determines a $m_0$ value, for computing a value of cyclic shift $\alpha$ [4, TS 38.211], from a cyclic shift pair index corresponding to a PSFCH resource index and from $N_{\text{CS}}^{\text{PSFCH}}$ using Table 16.3-1.

Table 16.3-1: Set of cyclic shift pairs

| $N_{\text{CS}}^{\text{PSFCH}}$ | $m_0$ | | | | | |
|---|---|---|---|---|---|---|
| | Cyclic Shift Pair Index 0 | Cyclic Shift Pair Index 1 | Cyclic Shift Pair Index 2 | Cyclic Shift Pair Index 3 | Cyclic Shift Pair Index 4 | Cyclic Shift Pair Index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a $m_{\text{cs}}$ value, for computing a value of cyclic shift $\alpha$ [4, TS 38.211], as in Table 16.3-2 if the UE detects a SCI format 2-A with Cast type indicator field value of "01" or "10", or as in Table 16.3-3 if the UE detects a SCI format 2-B or a SCI format 2-A with Cast type indicator field value of "11". The UE applies one cyclic shift from a cyclic shift pair to a sequence used for the PSFCH transmission [4, TS 38.211].

**Table 16.3-2: Mapping of HARQ-ACK information bit values to a cyclic shift, from a cyclic shift pair, of a sequence for a PSFCH transmission when HARQ-ACK information includes ACK or NACK**

| HARQ-ACK Value | 0 (NACK) | 1 (ACK) |
|---|---|---|
| Sequence cyclic shift | 0 | 6 |

**Table 16.3-3: Mapping of HARQ-ACK information bit values to a cyclic shift, from a cyclic shift pair, of a sequence for a PSFCH transmission when HARQ-ACK information includes only NACK**

| HARQ-ACK Value | 0 (NACK) | 1 (ACK) |
|---|---|---|
| Sequence cyclic shift | 0 | N/A |

Referring to (a) of FIG. 6, in step S640, the first UE may transmit SL HARQ feedback to the base station through the PUCCH and/or the PUSCH based on Tables 11 and 12.

[Table 11]

16.5 UE procedure for reporting HARQ-ACK on uplink

A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in Clause 9, of the cell where the UE monitors PDCCH for detection of DCI format 3_0.

For SL configured grant Type 1 or Type 2 PSSCH transmissions by a UE within a time period provided by *sl-PeriodCG,* the UE generates one HARQ-ACK information bit in response to the PSFCH receptions to multiplex in a PUCCH transmission occasion that is after a last time resource, in a set of time resources. For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0.

For each PSFCH reception occasion, from a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable

- if the UE receives a PSFCH associated with a SCI format 2-A with Cast type indicator field value of "10"

- generate HARQ-ACK information with same value as a value of HARQ-ACK information the UE determines from a PSFCH reception in the PSFCH reception occasion and, if the UE determines that a PSFCH is not received at the PSFCH reception occasion, generate NACK

- if the UE receives a PSFCH associated with a SCI format 2-A with Cast type indicator field value of "01"

- generate ACK if the UE determines ACK from at least one PSFCH reception occasion, from the number of PSFCH reception occasions, in PSFCH resources corresponding to every identity $M_{ID}$ of the UEs that the UE expects to receive the PSSCH, as described in Clause 16.3; otherwise, generate NACK

- if the UE receives a PSFCH associated with a SCI format 2-B or a SCI format 2-A with Cast type indicator field value of "11"

- generate ACK when the UE determines absence of PSFCH reception for each PSFCH reception occasion from the number of PSFCH reception occasions; otherwise, generate NACK

After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information.

The UE generates a NACK when, due to prioritization, as described in Clause 16.2.4, the UE does not receive PSFCH in any PSFCH reception occasion associated with a PSSCH transmission in a resource provided by a DCI format 3_0 with CRC scrambled by a SL-RNTI or, for a configured grant, in a resource provided in a single period and for which the UE is provided a PUCCH resource to report HARQ-ACK information. The priority value of the NACK is same as the priority value of the PSSCH transmission.

(continued)

16.5 UE procedure for reporting HARQ-ACK on uplink

The UE generates a NACK when, due to prioritization as described in Clause 16.2.4, the UE does not transmit a PSSCH in any of the resources provided by a DCI format 3_0 with CRC scrambled by SL-RNTI or, for a configured grant, in any of the resources provided in a single period and for which the UE is provided a PUCCH resource to report HARQ-ACK information. The priority value of the NACK is same as the priority value of the PSSCH that was not transmitted due to prioritization.

The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant.

[Table 12]

A UE does not expect to be provided PUCCH resources or PUSCH resources to report HARQ-ACK information that start earlier than $(N + 1) \cdot (2048 + 144) \cdot \kappa \cdot 2^{\mu} \cdot T_c$ after the end of a last symbol of a last PSFCH reception occasion, from a number of PSFCH reception occasions that the UE generates HARQ-ACK information to report in a PUCCH or PUSCH transmission, where

- $\kappa$ and $T_c$ are defined in [4, TS 38.211]
- $\mu = \min\,(\mu_{SL}, \mu_{UL})$, where $\mu_{SL}$ is the SCS configuration of the SL BWP and $\mu_{UL}$ is the SCS configuration of the active UL BWP on the primary cell
- $N$ is determined from $\mu$ according to Table 16.5-1

**Table 16.5-1: Values of $N$**

| $\mu$ | $N$ |
|---|---|
| 0 | 14 |
| 1 | 18 |
| 2 | 28 |
| 3 | 32 |

With reference to slots for PUCCH transmissions and for a number of PSFCH reception occasions ending in slot $n$, the UE provides the generated HARQ-ACK information in a PUCCH transmission within slot $n + k$, subject to the overlapping conditions in Clause 9.2.5, where $k$ is a number of slots indicated by a PSFCH-to-HARQ_feedback timing indicator field, if present, in a DCI format indicating a slot for PUCCH transmission to report the HARQ-ACK information, or $k$ is provided by *sl-PSFCH-ToPUCCH-CG-Type1-r16*. $k = 0$ corresponds to a last slot for a PUCCH transmission that would overlap with the last PSFCH reception occasion assuming that the start of the sidelink frame is same as the start of the downlink frame [4, TS 38.211].

For a PSSCH transmission by a UE that is scheduled by a DCI format, or for a SL configured grant Type 2 PSSCH transmission activated by a DCI format, the DCI format indicates to the UE that a PUCCH resource is not provided when a value of the PUCCH resource indicator field is zero and a value of PSFCH-to-HARQ feedback timing indicator field, if present, is zero. For a SL configured grant Type 1 PSSCH transmission, a PUCCH resource can be provided by *sl-N1PUCCH-AN-r16* and *sl-PSFCH-ToPUCCH-CG-Type1-r16*. If a PUCCH resource is not provided, the UE does not transmit a PUCCH with generated HARQ-ACK information from PSFCH reception occasions.

For a PUCCH transmission with HARQ-ACK information, a UE determines a PUCCH resource after determining a set of PUCCH resources for $O_{UCI}$ HARQ-ACK information bits, as described in Clause 9.2.1.

The PUCCH resource determination is based on a PUCCH resource indicator field [5, TS 38.212] in a last DCI format 3_0, among the DCI formats 3_0 that have a value of a PSFCH-to-HARQ_feedback timing indicator field indicating a same slot for the PUCCH transmission, that the UE detects and for which the UE transmits corresponding HARQ-ACK information in the PUCCH where, for PUCCH resource determination, detected DCI formats are indexed in an ascending order across PDCCH monitoring occasion indexes.

A UE does not expect to multiplex HARQ-ACK information for more than one SL configured grants in a same PUCCH.

A priority value of a PUCCH transmission with one or more sidelink HARQ-ACK information bits is the smallest priority value for the one or more HARQ-ACK information bits.

In the following, the CRC for DCI format 3_0 is scrambled with a SL-RNTI or a SL-CS-RNTI.

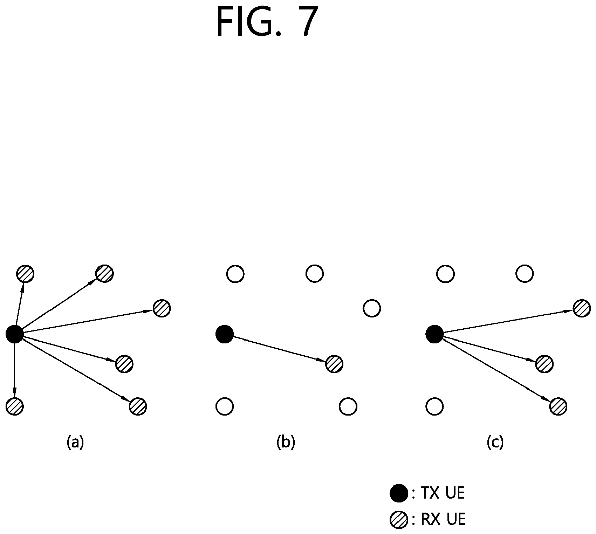

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Tables 13 to 16 show examples of DRX.

[Table 13]

| |
|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. |

(continued)

| NOTE 1: If Sidelink resource allocation mode 1 is configured by RRC, a DRX functionality is not configured. |
| --- |
| RRC controls DRX operation by configuring the following parameters: |
| - *drx-onDurationTimer:* the duration at the beginning of a DRX cycle; |
| - *drx-SlotOffset:* the delay before starting the *drx-onDurationTimer;* |
| - *drx-InactivityTimer:* the duration after the PDCCH occasion in which a PDCCH indicates a new UL or DL transmission for the MAC entity; |
| - *drx-RetransmissionTimerDL* (per DL HARQ process except for the broadcast process): the maximum duration until a DL retransmission is received; |
| - *drx-RetransmissionTimerUL* (per UL HARQ process): the maximum duration until a grant for UL retransmission is received; |
| - *drx-LongCycleStartOffset:* the Long DRX cycle and *drx-StartOffset* which defines the subframe where the Long and Short DRX cycle starts; |
| - *drx-ShortCycle* (optional): the Short DRX cycle; |
| - *drx-ShortCycleTimer* (optional): the duration the UE shall follow the Short DRX cycle; |
| - *drx-HARQ-RTT-TimerDL* (per DL HARQ process except for the broadcast process): the minimum duration before a DL assignment for HARQ retransmission is expected by the MAC entity; |
| - *drx-HARQ-RTT-TimerUL* (per UL HARQ process): the minimum duration before a UL HARQ retransmission grant is expected by the MAC entity; |
| - *ps-Wakeup* (optional): the configuration to start associated *drx-onDurationTimer* in case DCP is monitored but not detected; |
| - *ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started; |
| - *ps-TransmitPeriodicLl -RSRP* (optional): the configuration to transmit periodic CSI that is L1-RSRP on PUCCH during the time duration indicated by *drx-onDurationTimer* in case DCP is configured but associated *drx-onDurationTimer* is not started. |

(continued)

Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer, drx-InactivityTimer.* The DRX parameters that are common to the DRX groups are: *drx-SlotOffset, drx-RetransmissionTimerDL, drx-RetransmissionTimerUL, drx-LongCycleStartOffset, drx-ShortCycle* (optional), *drx-ShortCycleTimer* (optional), *drx-HARQ-RTT-TimerDL,* and *drx-HARQ-RTT-TimerUL.*

Referring to Table 13, parameters related to SL DRX may be defined like parameters related to DRX.

Tables 14 to 16 show an example of an active time for a serving cell for a DRX group if a DRX cycle is configured.

[Table 14]

When a DRX cycle is configured, the Active Time for Serving Cells in a DRX group includes the time while:
- *drx-onDurationTimer* or *drx-InactivityTimer* configured for the DRX group is running; or
- *drx-RetransmissionTimerDL* or *drx-RetransmissionTimerUL* is running on any Serving Cell in the DRX group; or
- *ra-ContentionResolutionTimer* (as described in clause 5.1.5) or *msgB-ResponseWindow* (as described in clause 5.1.4a) is running; or
- a Scheduling Request is sent on PUCCH and is pending (as described in clause 5.4.4); or
- a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a).

When DRX is configured, the MAC entity shall:
1> if a MAC PDU is received in a configured downlink assignment:
2> start the *drx-HARQ-RTT-TimerDL* for the corresponding HARQ process in the first symbol after the end of the corresponding transmission carrying the DL HARQ feedback;
2> stop the *drx-RetransmissionTimerDL* for the corresponding HARQ process.
1> if a MAC PDU is transmitted in a configured uplink grant and LBT failure indication is not received from lower layers:
2> start the *drx-HARQ-RTT-TimerUL* for the corresponding HARQ process in the first symbol after the end of the first repetition of the corresponding PUSCH transmission;
2> stop the *drx-RetransmissionTimerUL* for the corresponding HARQ process.
1> if a *drx-HARQ-RTT-TimerDL* expires:
2> if the data of the corresponding HARQ process was not successfully decoded:
3> start the *drx-RetransmissionTimerDL* for the corresponding HARQ process in the first symbol after the expiry of *drx-HARQ-RTT-TimerDL.*
1> if a *drx-HARQ-RIT-TimerUL* expires:

(continued)

| |
|---|
| 2> start the *drx-RetransmissionTimerUL* for the corresponding HARQ process in the first symbol after the expiry of *drx-HARQ-RTT-TimerUL*. |
| 1> if a DRX Command MAC CE or a Long DRX Command MAC CE is received: |
|     2> stop *drx-onDurationTimer* for each DRX group; |
|     2> stop *drx-InactivityTimer* for each DRX group. |
| 1> if *drx-InactivityTimer* for a DRX group expires: |
|     2> if the Short DRX cycle is configured: |
|         3> start or restart *drx-ShortCycleTimer* for this DRX group in the first symbol after the expiry of *drx-InactivityTimer;* |
|         3> use the Short DRX cycle for this DRX group. |
|     2> else: |
|         3> use the Long DRX cycle for this DRX group. |
| 1> if a DRX Command MAC CE is received: |
|     2> if the Short DRX cycle is configured: |
|         3> start or restart *drx-ShortCycleTimer* for each DRX group in the first symbol after the end of DRX Command MAC CE reception; |
|         3> use the Short DRX cycle for each DRX group. |
|     2> else: |
|         3> use the Long DRX cycle for each DRX group. |

[Table 15]

| |
|---|
| 1> if *drx-ShortCycleTimer* for a DRX group expires: |
|     2> use the Long DRX cycle for this DRX group. |
| 1> if a Long DRX Command MAC CE is received: |
|     2> stop *drx-ShortCycleTimer* for each DRX group; |
|     2> use the Long DRX cycle for each DRX group. |
| 1> if the Short DRX cycle is used for a DRX group, and [(SFN × 10) + subframe number] modulo (*drx-ShortCycle*) = (*drx-StartOffset*) modulo (*drx-ShortCycle*): |
|     2> start *drx-onDurationTimer* for this DRX group after *drx-SlotOffset* from the beginning of the subframe. |
| 1> if the Long DRX cycle is used for this DRX group, and [(SFN × 10) + subframe number] modulo (*drx-LongCycle*) = *drx-StartOffset:* |

(continued)

| |
|---|
| 2> if DCP monitoring is configured for the active DL BWP as specified in TS 38.213 [6], clause 10.3: |
|     3> if DCP indication associated with the current DRX cycle received from lower layer indicated to start *drx-onDurationTimer,* as specified in TS 38.213 [6]; or |
|     3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms prior to start of the last DCP occasion, or within BWP switching interruption length, or during a measurement gap, or when the MAC entity monitors for a PDCCH transmission on the search space indicated by *recoverySearchSpaceId* of the SpCell identified by the C-RNTI while the *ra-ResponseWindow* is running (as specified in clause 5.1.4); or |
|     3> if *ps-Wakeup* is configured with value *true* and DCP indication associated with the current DRX cycle has not been received from lower layers: |
|         4> start *drx-onDurationTimer* after *drx-SlotOffset* from the beginning of the subframe. |
| 2> else: |
|     3> start *drx-onDurationTimer* for this DRX group after *drx-SlotOffset* from the beginning of the subframe. |
| NOTE 2: In case of unaligned SFN across carriers in a cell group, the SFN of the SpCell is used to calculate the DRX duration. |
| 1> if a DRX group is in Active Time: |
|     2> monitor the PDCCH on the Serving Cells in this DRX group as specified in TS 38.213 [6]; |
|     2> if the PDCCH indicates a DL transmission: |
|         3> start the *drx-HARQ-RTT-TimerDL* for the corresponding HARQ process in the first symbol after the end of the corresponding transmission carrying the DL HARQ feedback; |
| NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback. |
|         3> stop the *drx-RetransmissionTimerDL* for the corresponding HARQ process. |
|         3> if the PDSCH-to-HARQ_feedback timing indicate a non-numerical k1 value as specified in TS 38.213 [6]: |
|             4> start the *drx-RetransmissionTimerDL* in the first symbol after the PDSCH transmission for the corresponding HARQ process. |
|     2> if the PDCCH indicates a UL transmission: |
|         3> start the *drx-HARQ-RTT-TimerUL* for the corresponding HARQ process in the first symbol after the end of the first repetition of the corresponding PUSCH transmission; |
|         3> stop the *drx-RetransmissionTimerUL* for the corresponding HARQ process. |
|     2> if the PDCCH indicates a new transmission (DL or UL) on a Serving Cell in this DRX group: |
|         3> start or restart *drx-InactivityTimer* for this DRX group in the first symbol after the end of the PDCCH reception. |

(continued)

| |
|---|
| 2> if a HARQ process receives downlink feedback information and acknowledgement is indicated:<br>　　3> stop the *drx-RetransmissionTimerUL* for the corresponding HARQ process. |

[Table 16]

| |
|---|
| 1> if DCP monitoring is configured for the active DL BWP as specified in TS 38.213 [6], clause 10.3; and<br>1> if the current symbol n occurs within *drx-onDurationTimer* duration; and<br>1> if *drx-onDurationTimer* associated with the current DRX cycle is not started as specified in this clause:<br>　　2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause:<br>　　　　3> not transmit periodic SRS and semi-persistent SRS defined in TS 38.214 [7];<br>　　　　3> not report semi-persistent CSI configured on PUSCH;<br>　　　　3> if *ps-TransmitPeriodicL1-RSRP* is not configured with value *true:*<br>　　　　　　4> not report periodic CSI that is L1-RSRP on PUCCH.<br>　　　　3> if *ps-TransmitOtherPeriodicCSI* is not configured with value *true:*<br>　　　　　　4> not report periodic CSI that is not L1-RSRP on PUCCH.<br>1> else:<br>　　2> in current symbol n, if a DRX group would not be in Active Time considering grants/assignments scheduled on Serving Cell(s) in this DRX group and DRX Command MAC CE/Long DRX Command MAC CE received and Scheduling Request sent until 4 ms prior to symbol n when evaluating all DRX Active Time conditions as specified in this clause:<br>　　　　3> not transmit periodic SRS and semi-persistent SRS defined in TS 38.214 [7] in this DRX group;<br>　　　　3> not report CSI on PUCCH and semi-persistent CSI configured on PUSCH in this DRX group.<br>　　2> if CSI masking *(csi-Mask)* is setup by upper layers:<br>　　　　3> in current symbol n, if *drx-onDurationTimer* of a DRX group would not be running considering grants/assignments scheduled on Serving Cell(s) in this DRX group and DRX Command MAC CE/Long DRX Command MAC CE received until 4 ms prior to symbol n when evaluating all DRX Active Time conditions as specified in this clause; and<br>　　　　　　4> not report CSI on PUCCH in this DRX group.<br>NOTE 4: If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX group in which this PUCCH is configured, it is up to UE implementation whether to report this CSI multiplexed with other UCI(s).<br>Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected. The MAC entity needs not to monitor the PDCCH if it is not a complete PDCCH occasion (e.g. the Active Time starts or ends in the middle of a PDCCH occasion). |

For example, an SL DRX configuration may include one or more information listed below.

For example, SL drx-onDurationTimer may be information on the duration at the beginning of a DRX cycle. For example, the duration at the beginning of the DRX cycle may be information on the duration in which the UE operates in an active mode to transmit or receive sidelink data.

For example, SL drx-SlotOffset may be information on the delay before starting the drx-onDurationTimer.

For example, SL drx-InactivityTimer may be information on the duration after the PSCCH occasion in which a PSCCH indicates a new sidelink transmission and reception for the MAC entity. For example, if a transmitting UE indicates PSSCH transmission through a PSCCH, the transmitting UE may operate in an active mode while SL drx-InactivityTimer is running and may transmit a PSSCH to a receiving UE. Also, for example, if the receiving UE is instructed that the transmitting UE transmits a PSSCH through PSCCH reception, the receiving UE may operate in an active mode while SL drx-InactivityTimer is running and may receive the PSSCH from the transmitting UE.

For example, SL drx-RetransmissionTimer may be information on the maximum duration until a retransmission is received. For example, SL drx-RetransmissionTimer may be configured per HARQ process.

For example, SL drx-LongCycleStartOffset may be information on the Long DRX cycle and drx-StartOffset which defines the subframe where the Long and Short DRX Cycle starts.

For example, SL drx-ShortCycle may be information on the Short DRX cycle. For example, SL drx-ShortCycle may be optional information.

For example, SL drx-ShortCycleTimer may be information on the duration the UE shall follow the Short DRX cycle. For example, SL drx-ShortCycleTimer may be optional information.

For example, SL drx-HARQ-RTT-Timer may be information on the minimum duration before an assignment for HARQ retransmission is expected by the MAC entity. For example, SL drx-HARQ-RTT-Timer may be configured per HARQ process.

Meanwhile, in NR V2X of release 16, a power saving operation of a user equipment (UE) is not supported, but in NR V2X of release 17, the power saving operation of the UE (e.g., a pedestrian UE) can be supported.

For example, in order to perform the power saving operation, the UE may perform a sidelink DRX operation based on a sidelink (SL) discontinuous reception (DRX) pattern (e.g., DRX cycle, DRX on-duration, DRX off-duration). For example, the SL DRX operation may include an on-duration operation and an off-duration operation. For example, the on-duration operation may be an operation of performing sidelink transmission/reception in an active mode. For example, the off-duration operation may be to operate in a sleep mode by turning off a sidelink RF. For example, the RF may refer to a radio frequency or a switch for the radio frequency. Also, for example, the UE may perform sidelink communication by using sidelink configured grant (CG) resources of the transmission resource allocation mode 1.

In the embodiment(s) of the present disclosure, a method for performing a sidelink DRX operation by a UE performing sidelink communication by using sidelink CG resources of the transmission resource allocation mode 1 is proposed. In the following description, 'when ~, if ~, in case of ~' may be replaced with 'based on ~'.

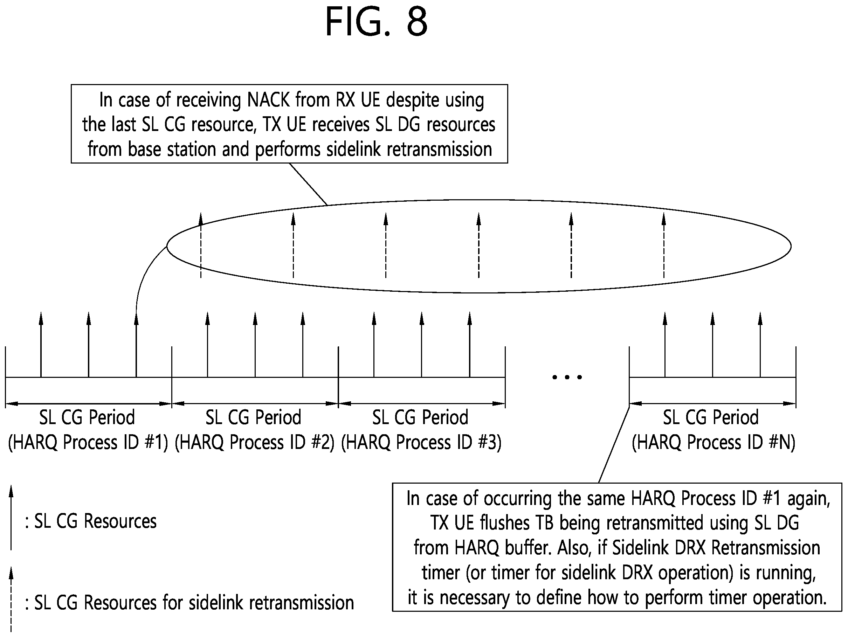

FIG. 8 shows an example of a collision between HARQ process IDs, based on an embodiment of the present disclosure.

A resource allocation operation using sidelink (SL) configured grant (CG) resources of the conventional transmission resource allocation mode 1 may be as follows.

For example, referring to FIG. 8, a HARQ process ID mapped per one period of SL CG resources may exist. A HARQ process ID mapped to SL CG resources within one period may be indicated by the base station to the UE through a PDCCH. Also, for example, a transmitting UE (hereinafter referred to as TX UE) may generate a sidelink process ID for a sidelink HARQ operation. That is, the TX UE may store/maintain a mapping relationship between a HARQ process ID mapped to CG resources within one period and a sidelink process ID generated for the sidelink HARQ operation. In addition, for example, three resources may be allocated within one period of SL CG resources, and the TX UE may transmit PSCCH/PSSCH (e.g., initial transmission, retransmission) to a receiving UE (hereinafter referred to as RX UE) by using three resources within one period. In addition, for example, when the TX UE perform transport block (TB) transmission within one period, the TX UE may not be able to use CG resources of the next period for transmission of an existing TB other than a new TB. For example, if the TX UE does not complete TB transmission by using three resources within one period, the TX UE may be allocated dynamic grant (DG) from the base station by requesting a DG-based retransmission resource from the base station. Then, the TX UE may retransmit the TB to the RX UE. In this case, if the TX UE continuously receives SL HARQ NACK from the RX UE, the TX UE may be allocated DG for retransmission from the base station (through PDCCH).

For example, when the base station allocates DG for retransmission, the base station may also indicate a HARQ process ID in a PDCCH. In addition, for example, the base station may indicate the same HARQ process ID as the HARQ process ID of the CG resources used by the UE in the PDCCH for DG allocation. That is, a HARQ process ID mapped to CG resources for transmission of the same TB and a HARQ process ID mapped to DG resource(s) (retransmission resource(s)) for the same TB may be set to the same value. For example, if the UE uses CG resources mapped to HARQ process ID #1 (e.g., CG resources within one period) and uses all three resources within one period, but fails to complete TB transmission, the UE may be allocated DG for TB retransmission from the base station. In this case, for example, the base station may indicate the same HARQ process ID #1 mapped to the CG resources for TB transmission as the HARQ process ID mapped to the DG for retransmission through the PDCCH. In addition, for example, if the TX UE continuously fails to retransmit the sidelink TB and all periods of CG resources have passed, a resource for sidelink retransmission may be located in a CG resource (CG resource within one period) mapped to HARQ process ID #1 again. Herein, for example, all periods of CG resources may be one period set configured for the UE, and another period set may be repeated after one period set. In this case, the TX UE may flush the TB for which sidelink retransmission has not been completed from a HARQ buffer (i.e., the HARQ buffer mapped to HARQ process ID #1). In addition, the TX UE may transmit a new TB to the RX UE by using CG resources (e.g., 3 CG resources within one period).

For example, if the UE supports the sidelink DRX operation, it may be necessary to define how the UE should perform a DRX timer operation in the above situation. That is, for example, after all periods related to CG resources, if a collision occurs between a HARQ process ID mapped to CG resources and a HARQ process ID mapped to DG resource(s) for retransmission, the UE may flush a retransmission TB from a HARQ buffer (i.e., the HARQ buffer mapped to the HARQ process ID in which the collision is occurred). In this case, it may be necessary to define how the UE should perform the DRX timer operation. In the present disclosure, the names of the timers (e.g., Uu DRX HARQ RTT TimerSL, Uu DRX Retransmission TimerSL, etc.) are exemplary, and timers performing the same/similar functions based on the contents described in each timer may be regarded as the same/similar timers regardless of their names.

In the present disclosure, the SL DRX timer operation based on the SL CG operation is proposed as follows.

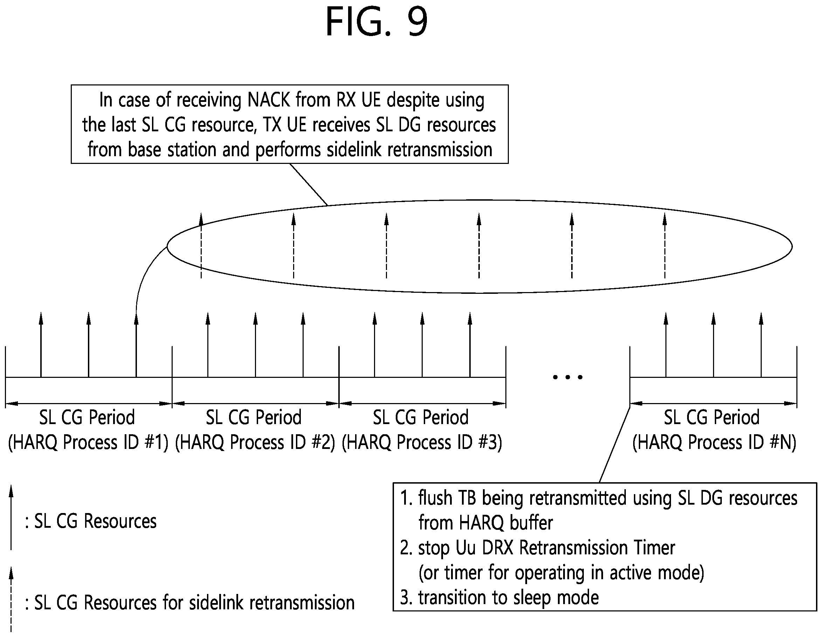

FIG. 9 shows an operation of a Uu DRX timer or an SL DR DRX timer for a sidelink operation, based on an embodiment of the present disclosure.

Based on an embodiment of the present disclosure, the following Uu DRX HARQ RTT TimerSL operation of the UE is proposed.

For example, a Uu DRX HARQ RTT TimerSL may be a timer operated by the UE until the UE is allocated retransmission resource(s) from the base station. For example, the UE may determine that the base station does not allocate retransmission resource(s) before the timer expires, and the UE may transition to a sleep mode state for Uu DRX. If the timer expires, the UE may transition to an active mode for Uu DRX to monitor retransmission resource(s).

Referring to FIG. 9, for example, the TX UE may perform TB transmission to the RX UE by using SL CG resources (i.e., n (e.g., 3) resources within one period of CG resources). If the TX UE performs TB transmission by using SL CG resources and receives at least one SL HARQ NACK or consecutive SL HARQ NACKs from the RX UE, the TX UE may retransmit the TB to the RX UE by using the remaining resources within one period. For example, if the TX UE receives SL HARQ NACK from the RX UE, the TX UE may start the Uu DRX HARQ RTT TimerSL. Or, for example, if the TX UE receives SL HARQ NACK from the RX UE and the TX UE requests DG resource(s) for retransmission by transmitting SL HARQ NACK to the base station through a PUCCH, the TX UE may start the Uu DRX HARQ RTT TimerSL. Also, for example, if the Uu DRX HARQ RTT TimerSL expires, the UE may transition to an active mode. Or, for example, if the TX UE receives SL HARQ NACK from the RX UE and reports SL HARQ NACK to the base station through a PUCCH, the TX UE may start the Uu DRX HARQ RTT TimerSL. Also, if the Uu DRX HARQ RTT TimerSL expires, the UE may transition to an active mode.

In this case, if the TX UE uses all three resources within one period and does not complete TB transmission, the TX UE may request DG for retransmission from the base station and may be allocated DG resource(s) for retransmission from the base station.

Also, for example, if the TX UE satisfies the following condition, the TX UE may stop the Uu DRX HARQ RTT TimerSL or may not start the Uu DRX HARQ RTT TimerSL, regardless of whether the TX UE receives SL HARQ feedback (e.g., NACK) from the RX UE. For example, if the Uu DRX HARQ RTT TimerSL is started, and if the TX UE satisfies the following condition, the TX UE may stop the Uu DRX HARQ RTT TimerSL, regardless of whether the TX UE receives SL HARQ feedback (e.g., NACK) from the RX UE. For example, if the Uu DRX HARQ RTT TimerSL is not started, and if the TX UE satisfies the following condition, the TX UE may not start the Uu DRX HARQ RTT TimerSL, regardless of whether the TX UE receives SL HARQ feedback (e.g., NACK) from the RX UE.

For example, in the case of performing TB transmission (e.g., initial transmission or retransmission) by using SL CG resources (i.e., three resources within one period used for TB transmission), if the TX UE does not complete TB transmission even though all three resources within one period are used, the TX UE may perform TB retransmission by requesting/receiving DG resource(s). In this case, for example, a HARQ process ID (or HARQ process number) mapped to the DG resource(s) for retransmission may be the same value as a HARQ process ID of the CG resources (e.g., CG resources used to perform TB initial transmission/retransmission, that is, three resources within one period). For example, the above condition may be a case in which the TX UE does not receive sidelink HARQ ACK from the RX UE and continues to use the DG resource(s) for retransmission, and a CG resource having the same value as the HARQ process ID used by the TX UE occurs again after all periods of CG resources have passed. Herein, for example, all periods of CG resources may be one period set configured for the UE, and another period set may be repeated after one period set. For example, if the above condition is satisfied and the Uu DRX HARQ RTT TimerSL is started, the TX UE may stop the Uu DRX HARQ RTT TimerSL. For example, if the above condition is satisfied and the Uu DRX HARQ RTT TimerSL is not started, the TX UE may not start the Uu DRX HARQ RTT TimerSL.

In addition, for example, if the TX UE does not receive sidelink HARQ ACK from the RX UE and continues to use the DG resource(s) for retransmission, and a CG resource having the same value as the HARQ process ID used by the TX UE occurs again after all periods of CG resources have passed, the TX UE may flush a HARQ buffer for the sidelink TB for which retransmission using the DG resource(s) for retransmission did not complete.

That is, in the case of performing TB transmission (e.g., initial transmission or retransmission) by using SL CG resources (i.e., three resources within one period used for TB transmission), if the TX UE does not complete TB transmission even though all three resources within one period are used, the TX UE may perform TB retransmission by requesting/receiving DG resource(s). In this case, a HARQ process ID (or HARQ process number) mapped to the DG resource(s) for retransmission may be the same value as a HARQ process ID of the CG resources (e.g., CG resources used to perform TB initial transmission/retransmission, that is, three resources within one period). If the TX UE does not receive sidelink HARQ ACK from the RX UE and continues to use the DG resource(s) for retransmission, and a CG resource having the same value as the HARQ process ID used by the TX UE occurs again after all periods of CG resources have passed, the TX UE may flush a HARQ buffer for the sidelink TB for which retransmission using the DG resource(s) for retransmission did not complete, and the TX UE may stop or not start the Uu DRX HARQ RTT TimerSL even if the TX UE does not receive sidelink HARQ NACK from the RX UE. For example, if the Uu DRX HARQ RTT TimerSL is started, the TX UE may transition to a sleep mode for sidelink DRX by stopping the Uu DRX HARQ RTT TimerSL. For example, if the Uu DRX HARQ RTT TimerSL is not started, the TX UE may transition to a sleep mode for sidelink DRX by not starting the Uu DRX HARQ RTT TimerSL.

In the present disclosure, the following Uu DRX HARQ Retransmission TimerSL operation of the UE is proposed.

Based on an embodiment of the present disclosure, the UE may perform the following operation by using a Uu DRX Retransmission TimerSL.

For example, the Uu DRX Retransmission TimerSL may be a Uu DRX timer that operates until the UE monitors retransmission resource(s) allocated by the base station and completes retransmission by using the retransmission resource(s) allocated by the base station. For example, the UE may start the Uu DRX Retransmission TimerSL if the Uu DRX HARQ RTT TimerSL expires. For example, if the UE transmits a sidelink retransmission packet to the counterpart UE and receives sidelink HARQ feedback (e.g., ACK or NACK), the UE may stop the Uu DRX Retransmission TimerSL. For example, since transmission is complete if the UE receives ACK, the UE may operate in a Uu DRX sleep mode. For example, since the UE starts the Uu DRX HARQ RTT TimerSL if the UE receives NACK, the UE may operate in the Uu DRX sleep mode during the Uu DRX HARQ RTT TimerSL. Thereafter, if the Uu DRX HARQ RTT TimerSL expires, the UE may start the Uu DRX Retransmission TimerSL.

Referring to FIG. 9, for example, the TX UE may perform TB transmission to the RX UE by using SL CG resources (i.e., n (e.g., 3) resources within one period of CG resources). If the TX UE performs TB transmission by using SL CG resources and receives at least one SL HARQ NACK or consecutive SL HARQ NACKs from the RX UE, the TX UE may retransmit the TB to the RX UE by using the remaining resources within one period. For example, if the TX UE receives SL HARQ NACK from the RX UE, the TX UE may start the Uu DRX HARQ RTT TimerSL. Or, for example, if the TX UE receives SL HARQ NACK from the RX UE and the TX UE requests DG resource(s) for retransmission by transmitting SL HARQ NACK to the base station through a PUCCH, the TX UE may start the Uu DRX HARQ RTT TimerSL. Also, for example, if the Uu DRX HARQ RTT TimerSL expires, the UE may transition to an active mode. Or, for example, if the TX UE receives SL HARQ NACK from the RX UE and reports SL HARQ NACK to the base station through a PUCCH, the TX UE may start the Uu DRX HARQ RTT TimerSL. Also, if the Uu DRX HARQ RTT TimerSL expires, the UE may transition to an active mode and start the Uu DRX Retransmission TimerSL. For example, if the TX UE transmits a sidelink retransmission TB to the RX UE and receives SL HARQ feedback (e.g., NACK) for the retransmission TB from the RX UE, the TX UE may stop the Uu DRX Retransmission TimerSL.

In the present disclosure, for example, if the TX UE satisfies the following condition, the TX UE may stop the Uu DRX Retransmission TimerSL or may not start the Uu DRX Retransmission TimerSL, regardless of whether SL HARQ feedback (e.g., NACK) is received from the RX UE. Herein, for example, if the following condition is satisfied, the SL DRX HARQ RTT timer or the SL DRX HARQ retransmission timer may be stopped or the SL DRX HARQ RTT timer or the SL DRX HARQ retransmission timer may not be started, regardless of SL HARQ feedback.

For example, in the case of performing TB transmission (e.g., initial transmission or retransmission) by using SL CG resources (i.e., three resources within one period used for TB transmission), if the TX UE does not complete TB transmission even though all three resources within one period are used, the TX UE may perform TB retransmission by requesting/receiving DG resource(s). In this case, for example, a HARQ process ID (or HARQ process number) mapped to the DG resource(s) for retransmission may be the same value as a HARQ process ID of the CG resources (e.g., CG resources used to perform TB initial transmission/retransmission, that is, three resources within one period). For example, the above condition may be a case in which the TX UE does not receive sidelink HARQ ACK from the RX UE and continues to use the DG resource(s) for retransmission, and a CG resource having the same value as the HARQ process ID used by the TX UE occurs again after all periods of CG resources have passed. Herein, for example, all periods of CG resources may be one period set configured for the UE, and another period set may be repeated after one period set. For example, if the above condition is satisfied and the Uu DRX Retransmission TimerSL is started, the Uu DRX Retransmission TimerSL may be stopped. For example, if the above condition is satisfied and the Uu DRX Retransmission TimerSL is not started, the Uu DRX Retransmission TimerSL may not be started.

In addition, for example, if the TX UE does not receive sidelink HARQ ACK from the RX UE and continues to use the DG resource(s) for retransmission, and a CG resource having the same value as the HARQ process ID used by the TX UE occurs again after all periods of CG resources have passed, the TX UE may flush a HARQ buffer for the sidelink TB for which retransmission using the DG resource(s) for retransmission did not complete.

That is, in the case of performing TB transmission (e.g., initial transmission or retransmission) by using SL CG resources (i.e., three resources within one period used for TB transmission), if the TX UE does not complete TB transmission even though all three resources within one period are used, the TX UE may perform TB retransmission by requesting/receiving DG resource(s). In this case, a HARQ process ID (or HARQ process number) mapped to the DG resource(s) for retransmission may be the same value as a HARQ process ID of the CG resources (e.g., CG resources used to perform TB initial transmission/retransmission, that is, three resources within one period). If the TX UE does not receive sidelink HARQ ACK from the RX UE and continues to use the DG resource(s) for retransmission, and a CG resource having the same value as the HARQ process ID used by the TX UE occurs again after all periods of CG resources have passed, the TX UE may flush a HARQ buffer for the sidelink TB for which retransmission using the DG resource(s) for retransmission did not complete.

In this case, if the HARQ buffer is flushed, for example, the TX UE may stop the Uu DRX Retransmission TimerSL even if the TX UE does not receive sidelink HARQ NACK from the RX UE. Or, for example, the TX UE may stop a timer for operating the UE in an active mode even if the TX UE does not receive sidelink HARQ NACK from the RX UE. Herein, for example, the timer for operating the UE in the active mode may include at least one of a Uu DRX inactivity timer and an SL DRX inactivity timer. For example, the Uu DRX inactivity timer may be a timer started when the UE receives an indication for new data through a PDCCH. For example, the SL DRX inactivity timer may be a timer started when the UE receives an indication for new data through a PSCCH/PSSCH.

Or, if the HARQ buffer is flushed, for example, if the Uu DRX Retransmission TimerSL is not started even if the TX UE does not receive sidelink HARQ NACK from the RX UE, the TX UE may not start the Uu DRX Retransmission TimerSL. Or, for example, if a timer for operating the UE in an active mode is not started even if the TX UE does not receive sidelink HARQ NACK from the RX UE, the TX UE may not start the timer for operating the UE in the active mode. Herein, for example, the timer for operating the UE in the active mode may include at least one of a Uu DRX inactivity timer and an SL DRX inactivity timer.

For example, if the HARQ buffer is flushed, the UE may operate in a Uu DRX sleep mode by stopping or not starting the Uu DRX Retransmission TimeSL. For example, if the HARQ buffer is flushed, the UE may operate in a Uu DRX sleep mode or an SL DRX sleep mode by stopping or not starting a timer for operating the UE in an active mode. For example, if the HARQ buffer is flushed, the UE may operate in a Uu DRX sleep mode by stopping or not starting the Uu DRX inactivity timer. For example, if the HARQ buffer is flushed, the UE may operate in an SL DRX sleep mode by stopping or not starting the SL DRX retransmission TimeSL. For example, if the HARQ buffer is flushed, the UE may operate in an SL DRX sleep mode by stopping or not starting the SL DRX inactivity timer. Herein, for example, a timer related to Uu DRX and a timer related to SL DRX may be independent of each other.

In the present disclosure, the sidelink transmission/reception operation and the sidelink DRX operation of the UE are proposed as follows.

Based on an embodiment of the present disclosure, the sidelink DRX HARQ RTT timer operation of the UE is proposed.

For example, the RX UE may determine that the TX UE transmits a sidelink retransmission TB or a retransmission packet after a specific time (i.e., sidelink DRX HARQ RTT timer), and the RX UE may operate in a sleep mode during this time (i.e., sidelink DRX HARQ RTT timer) by turning off an RF of sidelink DRX. For example, if the sidelink DRX HARQ RTT timer expires, the RX UE may start the sidelink DRX retransmission timer by transitioning to an active mode, and the RX UE may receive a sidelink retransmission packet or a TB transmitted by the TX UE.

Referring to FIG. 9, for example, the TX UE may perform TB transmission to the RX UE by using SL CG resources (i.e., n (e.g., 3) resources within one period of CG resources). If the TX UE performs TB transmission by using SL CG resources and receives at least one SL HARQ NACK or consecutive SL HARQ NACKs from the RX UE, the TX UE may retransmit the TB to the RX UE by using the remaining resources within one period. If the RX UE receives the initial transmission or retransmission packet from the TX UE and transmits sidelink HARQ NACK to the TX UE, the RX UE may start the sidelink DRX HARQ RTT timer and transition to a sleep mode. Thereafter, if the sidelink DRX HARQ RTT timer expires, the RX UE may transition to the active mode. The RX UE may start the sidelink DRX retransmission timer, and the RX UE may receive a sidelink packet or a TB retransmitted by the TX UE.

In this case, if the TX UE uses all three resources within one period and does not complete TB transmission, the TX UE may request DG for retransmission from the base station and may be allocated DG resource(s) for retransmission from the base station.

For example, in the case of performing TB transmission (e.g., initial transmission or retransmission) by using SL CG resources (i.e., three resources within one period used for TB transmission), if the TX UE does not complete TB transmission even though all three resources within one period are used, the TX UE may perform TB retransmission by requesting/receiving DG resource(s). In this case, for example, a HARQ process ID (or HARQ process number) mapped to the DG resource(s) for retransmission may be the same value as a HARQ process ID of the CG resources (e.g., CG resources used to perform TB initial transmission/retransmission, that is, three resources within one period). For example, if the TX UE does not receive sidelink HARQ ACK from the RX UE and continues to use the DG resource(s) for retransmission, and a CG resource having the same value as the HARQ process ID used by the TX UE occurs again after all periods of CG resources have passed, the TX UE may transmit a sidelink wake up indication message (for the purpose of indicating transition to a sleep mode) or a sidelink DRX command MAC CE (for the purpose of indicating transition to a sleep mode) to the RX UE. Herein, for example, all periods of CG resources may be one period set configured for the UE, and another period set may be repeated after one period set. For example, the sidelink wake up indication may be transferred to the RX UE through at least one of L1 signaling, a PC5 RRC message, or a MAC CE. For example, if the RX UE receives the sidelink wake up indication message or the sidelink DRX command MAC CE from the TX UE, the RX UE may transition to a sleep mode by stopping or not starting the sidelink DRX HARQ RTT timer. For example, if the RX UE receives the sidelink wake up indication message or the sidelink DRX command MAC CE from the TX UE, and the sidelink DRX HARQ RTT timer is running, the RX UE may transition to a sleep mode by stopping the sidelink DRX HARQ RTT timer. For example, if the RX UE receives the sidelink wake up indication message or the sidelink DRX command MAC CE from the TX UE, and the sidelink DRX HARQ RTT timer is not started, the RX UE may transition to a sleep mode by not starting the sidelink DRX HARQ RTT timer.

In addition, for example, if the TX UE does not receive sidelink HARQ ACK from the RX UE and continues to use the DG resource(s) for retransmission, and a CG resource having the same value as the HARQ process ID used by the TX UE occurs again after all periods of CG resources have passed, the TX UE may flush a HARQ buffer for the sidelink TB for which retransmission using the DG resource(s) for retransmission did not complete.

In this case, for example, the TX UE may indicate to the RX UE that retransmission for the TB is no longer performed due to flushing the HARQ buffer for the TB transmission. In this case, for example, the TX UE may indicate or inform the RX UE that retransmission for the TB is no longer performed due to flushing the HARQ buffer for the TB transmission through at least one of SCI, a MAC CE, or a PC5 RRC message. For example, if the RX UE receives, from the TX UE, information representing that retransmission for the TB is no longer performed due to flushing the HARQ buffer for the TB transmission, the RX UE may stop or not start the sidelink DRX HARQ RTT timer, and the RX UE may transition to a sidelink DRX sleep mode. For example, if the RX UE receives, from the TX UE, information representing that retransmission for the TB is no longer performed due to flushing the HARQ buffer for the TB transmission through at least one of SCI, a MAC CE, or a PC5 RRC message, the RX UE may stop or not start the sidelink DRX HARQ RTT timer, and the RX UE may transition to a sidelink DRX sleep mode. For example, if the sidelink DRX HARQ RTT timer is running, the RX UE may stop the sidelink HARQ RTT timer. For example, if the sidelink DRX HARQ RTT timer is not started, the RX UE may not start the sidelink HARQ RTT timer.

Based on an embodiment of the present disclosure, the sidelink DRX retransmission timer operation of the UE is proposed.

For example, the sidelink DRX retransmission timer may be a timer representing a time when the RX UE operates in an active time to receive a sidelink retransmission packet of the TX UE. For example, if the sidelink HARQ RTT timer expires, the RX UE may start the sidelink DRX retransmission timer, and the RX UE may receive a retransmission packet transmitted by the TX UE. For example, if the RX UE receives a sidelink packet and transmits sidelink HARQ feedback (e.g., ACK or NACK) to the TX UE, the RX UE may stop the sidelink DRX retransmission timer and operate in a sidelink DRX sleep mode. For example, if the RX UE transmits ACK, the RX UE may operate in a sleep mode since transmission is complete. For example, if the RX UE transmits NACK, the RX UE may start the sidelink DRX HARQ RTT timer and operate in a sleep mode during the sidelink DRX HARQ RTT timer.

Referring to FIG. 9, for example, the TX UE may perform TB transmission to the RX UE by using SL CG resources (i.e., n (e.g., 3) resources within one period of CG resources). If the TX UE performs TB transmission by using SL CG resources and receives at least one SL HARQ NACK or consecutive SL HARQ NACKs from the RX UE, the TX UE may retransmit the TB to the RX UE by using the remaining resources within one period. If the RX UE receives the initial transmission or retransmission packet from the TX UE and transmits sidelink HARQ NACK to the TX UE, the RX UE may start the sidelink DRX HARQ RTT timer and transition to a sleep mode. Thereafter, if the sidelink DRX HARQ RTT timer expires, the RX UE may transition to the active mode. The RX UE may start the sidelink DRX retransmission timer, and the RX UE may receive a sidelink packet or a TB retransmitted by the TX UE. Thereafter, for example, if the RX UE receives the retransmission packet and transmits sidelink HARQ feedback (e.g., ACK or NACK) to the TX UE, the RX UE may stop the sidelink DRX retransmission timer and operate in a sidelink DRX sleep mode. For example, if the RX UE transmits ACK, the RX UE may operate in a sleep mode since transmission is complete. For example, if the RX UE transmits NACK, the RX UE may start the sidelink DRX HARQ RTT timer and operate in a sleep mode during the sidelink DRX HARQ RTT timer.

Also, for example, in the case of performing TB transmission (e.g., initial transmission or retransmission) by using SL CG resources (i.e., three resources within one period used for TB transmission), if the TX UE does not complete TB transmission even though all three resources within one period are used, the TX UE may perform TB retransmission by requesting/receiving DG resource(s). In this case, for example, a HARQ process ID (or HARQ process number) mapped to the DG resource(s) for retransmission may be the same value as a HARQ process ID of the CG resources (e.g., CG resources used to perform TB initial transmission/retransmission, that is, three resources within one period). For example, if the TX UE does not receive sidelink HARQ ACK from the RX UE and continues to use the DG resource(s) for retransmission, and a CG resource having the same value as the HARQ process ID used by the TX UE occurs again after all periods of CG resources have passed, the TX UE may flush a HARQ buffer for the sidelink TB being retransmitted using the DG resource(s). Herein, for example, all periods of CG resources may be one period set configured for the UE, and another period set may be repeated after one period set. In addition, for example, if the TX UE does not receive sidelink HARQ ACK from the RX UE and continues to use the DG resource(s) for retransmission, and a CG resource having the same value as the HARQ process ID used by the TX UE occurs again after all periods of CG resources have passed, the TX UE may transmit a sidelink wake up indication message (for the purpose of indicating transition to a sleep mode) or a sidelink DRX command MAC CE (for the purpose of indicating transition to a sleep mode) to the RX UE. For example, the sidelink wake up indication may be transferred to the RX UE through at least one of L1 signaling, a PC5 RRC message, or a MAC CE. For example, if the RX UE receives the sidelink wake up indication message or the sidelink DRX command MAC CE from the TX UE, the RX UE may stop or not start the sidelink DRX retransmission timer or a timer for operating the RX UE in an active mode. For example, the timer for operating the RX UE in the active mode may include a sidelink DRX inactivity timer. For example, the sidelink DRX inactivity timer may be a timer started when the UE receives an indication for new data through a PSCCH/PSSCH. For example, if the RX UE receives the sidelink wake up indication message or the sidelink DRX command MAC CE from the TX UE, the RX UE may operate in an SL DRX sleep mode by stopping the sidelink DRX retransmission timer or the timer for operating the RX UE in the active mode. For example, if the RX UE receives the sidelink wake up indication message or the sidelink DRX command MAC CE from the TX UE, the RX UE may operate in an SL DRX sleep mode by not starting the sidelink DRX retransmission timer or the timer for operating the RX UE in the active mode. For example, if the RX UE receives the sidelink wake up indication message from the TX UE, the RX UE may transition to an SL DRX sleep mode by not starting the sidelink DRX retransmission timer.

In addition, for example, if the TX UE does not receive sidelink HARQ ACK from the RX UE and continues to use the DG resource(s) for retransmission, and a CG resource having the same value as the HARQ process ID used by the TX UE occurs again after all periods of CG resources have passed, the TX UE may flush a HARQ buffer for the sidelink TB for which retransmission using the DG resource(s) for retransmission did not complete.

In this case, for example, the TX UE may indicate to the RX UE that retransmission for the TB is no longer performed due to flushing the HARQ buffer for the TB transmission. In this case, for example, the TX UE may indicate or inform the RX UE that retransmission for the TB is no longer performed due to flushing the HARQ buffer for the TB transmission through at least one of SCI, a MAC CE, or a PC5 RRC message.

For example, if the RX UE receives, from the TX UE, information representing that retransmission for the TB is no longer performed due to flushing the HARQ buffer for the TB transmission, the RX UE may stop the running timer (e.g., timer for operating in an active mode). For example, the timer for operating in the active mode may include a sidelink DRX inactivity timer or a sidelink DRX retransmission timer. For example, if the RX UE receives, from the TX UE, information representing that retransmission for the TB is no longer performed due to flushing the HARQ buffer for the TB transmission, the RX UE may transition to a sidelink DRX sleep mode by stopping or not starting the sidelink DRX retransmission timer. For example, if the RX UE receives, from the TX UE, information representing that retransmission for the TB is no longer performed due to flushing the HARQ buffer for the TB transmission through at least one of SCI, a MAC CE, or a PC5 RRC message, the RX UE may stop or not start the timer for operating in the active mode, and the RX UE may transition to a sidelink DRX sleep mode. For example, if the RX UE receives, from the TX UE, information representing that retransmission for the TB is no longer performed due to flushing the HARQ buffer for the TB transmission through at least one of SCI, a MAC CE, or a PC5 RRC message, the RX UE may stop or not start the sidelink DRX HARQ retransmission timer, and the RX UE may transition to a sidelink DRX sleep mode.

The various embodiments of the present disclosure can be applied for a UE-pair specific SL DRX configuration, a UE-pair specific SL DRX pattern, a parameter included in the UE-pair specific SL DRX configuration, or a timer included in the UE-pair specific SL DRX configuration, as well as a default/common SL DRX configuration, a default/common SL DRX pattern, a parameter included in the default/common SL DRX configuration or a timer included in the default/common SL DRX configuration.

In addition, in the present disclosure, for example, 'on-duration' may be an active time duration (the duration operating in a wake-up state (an RF module is "on") to receive/transmit a wireless signal). For example, 'off-duration' may be a sleep time duration (the duration operating in a sleep mode (an RF module is "off") for power saving, wherein the transmitting UE may not operate in the sleep mode during the sleep time duration, and wherein if necessary, even in the sleep time, it may be allowed to operate as an active time for a moment for a sensing operation/transmission operation). In addition, for example, whether various embodiments of the present disclosure are applied may be configured differently or independently, based on a resource pool, a congestion level, a service priority, a service type, a QoS requirement (e.g., latency, reliability), PQI, a traffic type (e.g., periodic generation, aperiodic generation), or SL transmission resource allocation mode (mode 1, mode 2). For example, parameters (e.g., threshold) related to various embodiments of the present disclosure may be configured differently or independently, based on a resource pool, a congestion level, a service priority, a service type, a QoS requirement (e.g., latency, reliability), PQI, a traffic type (e.g., periodic generation, aperiodic generation), or SL transmission resource allocation mode (mode 1, mode 2).

For example, whether or not various embodiments of the present disclosure are applied may be configured differently or independently, based on at least one of a resource pool (e.g., a resource pool in which a PSFCH is configured, a resource pool in which a PSFCH is not configured), a service/packet type, a priority, a QoS requirement (e.g., URLLC/EMBB traffic, reliability, latency), PQI, PFI, a cast type (e.g., unicast, groupcast, broadcast), a congestion level (e.g., CBR), a resource pool congestion level, an SL HARQ feedback scheme (e.g., NACK only feedback scheme, ACK/NACK feedback scheme), MAC PDU transmission with HARQ feedback enabled, MAC PDU transmission with HARQ feedback disabled, whether PUCCH-based SL HARQ feedback reporting operation is configured, whether to perform pre-emption, whether to perform re-evaluation, pre-emption based resource re-selection, re-evaluation based resource re-selection, an L1 source identifier, an L1 destination identifier, an L2 source identifier, an L2 destination identifier, a combination identifier of an L1 source layer ID and an L1 destination layer ID, a combination identifier of an L2 source layer ID and an L2 destination layer ID, a combination identifier of a pair of an L1 source layer ID and an L1 destination layer ID and a cast type, a combination identifier of a pair of an L2 source layer ID and an L2 destination layer ID and a cast type, PC5 RRC connection/link, whether to perform SL DRX, whether to support SL DRX, an SL mode type (resource allocation mode 1, resource allocation mode 2), periodic resource reservation, or aperiodic resource reservation.

For example, parameter configuration values related to various embodiments of the present disclosure may be configured differently or independently, based on at least one of a resource pool (e.g., a resource pool in which a PSFCH is configured, a resource pool in which a PSFCH is not configured), a service/packet type, a priority, a QoS requirement (e.g., URLLC/EMBB traffic, reliability, latency), PQI, PFI, a cast type (e.g., unicast, groupcast, broadcast), a congestion level (e.g., CBR), a resource pool congestion level, an SL HARQ feedback scheme (e.g., NACK only feedback scheme, ACK/NACK feedback scheme), MAC PDU transmission with HARQ feedback enabled, MAC PDU transmission with HARQ feedback disabled, whether PUCCH-based SL HARQ feedback reporting operation is configured, whether to perform pre-emption, whether to perform re-evaluation, pre-emption based resource re-selection, re-evaluation based resource re-selection, an L1 source identifier, an L1 destination identifier, an L2 source identifier, an L2 destination identifier, a combination identifier of an L1 source layer ID and an L1 destination layer ID, a combination identifier of an L2 source layer ID and an L2 destination layer ID, a combination identifier of a pair of an L1 source layer ID and an L1 destination layer ID and a cast type, a combination identifier of a pair of an L2 source layer ID and an L2 destination layer ID and a cast type, PC5 RRC connection/link, whether to perform SL DRX, whether to support SL DRX, an SL mode type (resource allocation mode 1, resource allocation mode 2), periodic resource reservation, or aperiodic resource reservation.

In the present disclosure, for example, "specific time" may be a time in which the UE operates in an active time for a predefined time in order to receive a sidelink signal or sidelink data from a counterpart/peer UE. For example, "specific time" may be a time in which the UE operates in an active time as long as a timer (e.g., an SL DRX retransmission timer, an SL DRX inactivity timer, a timer for operating the RX UE in an active time in the DRX operation) time to receive a sidelink signal or sidelink data from a counterpart/peer UE.

Various embodiments of the present disclosure may be applied to millimeter wave (mmWave) SL operation. Whether various embodiments of the present disclosure are applied may be applied to millimeter wave (mmWave) SL operation. Parameter configuration values related to various embodiments of the present disclosure may be applied to millimeter wave (mmWave) SL operation.

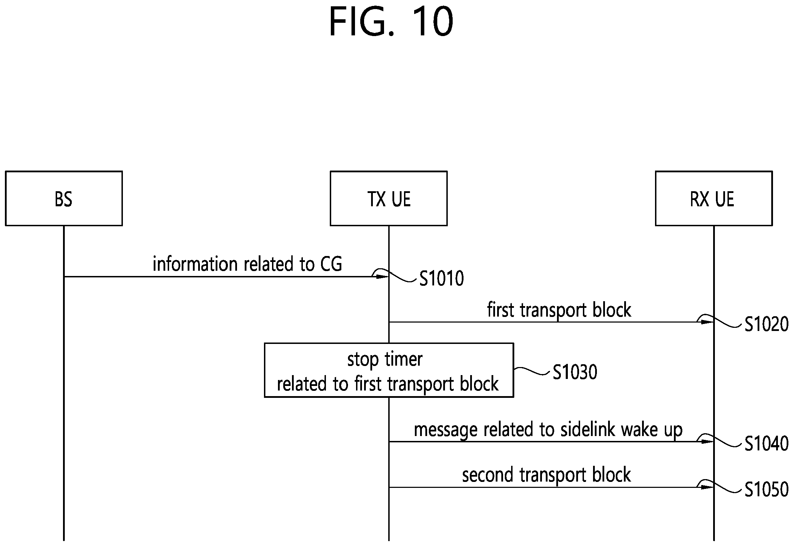

FIG. 10 shows a procedure in which a transmitting UE stops a timer related to a first transport block and transmits a second transport block, based on an embodiment of the present disclosure. The embodiment of FIG. 10 may be combined with various embodiments of the present disclosure.

Referring to FIG. 10, in step S1010, the transmitting UE may receive information related to configured grant (CG) from a base station. For example, the information related to the CG may include information related to a hybrid automatic repeat request (HARQ) process ID for the CG and period information of resources related to the CG.

In step S 1020, the transmitting UE may transmit the first transport block to a receiving UE. For example, the transmitting UE may transmit the first transport block to the receiving UE in a first period based on the period information and a first HARQ process ID.

In step S 1030, based on that transmission of the first transport block is failed and the first HARQ process ID is the same as a second HARQ process ID, the transmitting UE may stop a discontinuous reception (DRX) timer related to the first transport block in a second period related to the second HARQ process ID. For example, DRX related to the first transport block may include DRX between the transmitting UE and the base station and DRX between the transmitting UE and the receiving UE. For example, the failure of the transmission of the first transport block may be that the transmitting UE receives SL HARQ NACK for the first transport block from the receiving UE.

In step S 1040, the transmitting UE may transmit a message related to sidelink wake-up to the receiving UE. In step S 1050, the transmitting UE may transmit the second transport block to the receiving UE.

For example, the DRX timer related to the first transport block may include a HARQ round-trip time (RTT) timer related to Uu DRX between the transmitting UE and the base station or a HARQ DRX retransmission timer related to Uu DRX between the transmitting UE and the base station.

For example, the DRX timer related to the first transport block may be an SL DRX RTT timer between the transmitting UE and the receiving UE, an SL DRX retransmission timer between the transmitting UE and the receiving UE, or an SL DRX inactivity timer between the transmitting UE and the receiving UE.

For example, based on that the transmission of the first transport block is failed and the first HARQ process ID is the same as the second HARQ process ID, the transmitting UE may transmit a message related to sidelink wake up to the receiving UE. For example, the message related to sidelink wake up may be transmitted through L1 signaling, a MAC CE, or a PC5 RRC message. For example, based on the message related to sidelink wake up, the receiving UE may transition to a sleep mode related to SL DRX for the transmitting UE. For example, the message related to sidelink wake up may include at least one of the sidelink wake up indication message or the sidelink DRX command MAC CE.

For example, based on that the transmission of the first transport block is failed and the first HARQ process ID is the same as the second HARQ process ID, a HARQ buffer related to the first transport block may be flushed. For example, based on flushing of the HARQ buffer, a message informing that retransmission of the first transport block is not performed may be transmitted to the receiving UE. For example, the message informing that retransmission of the first transport block is not performed may be transmitted through SCI, a MAC CE, or a PC5 RRC message. For example, based on the message informing that retransmission of the first transport block is not performed, the receiving UE may transition to a sleep mode related to SL DRX for the transmitting UE.

For example, based on the failure of the transmission of the first transport block, a resource for retransmitting the first transport block may be allocated from the base station to the transmitting UE. For example, the first HARQ process ID may be determined based on information related to the HARQ process ID. For example, the first HARQ process ID may be related to the resource for retransmitting the first transport block.

For example, the second transport block may be related to the second HARQ process ID. For example, the second HARQ process ID may be determined based on information related to the HARQ process. For example, based on that the transmission of the first transport block is failed and the first HARQ process ID is the same as the second HARQ process ID, the transmitting UE may transmit the second transport block to the receiving UE in the second period.

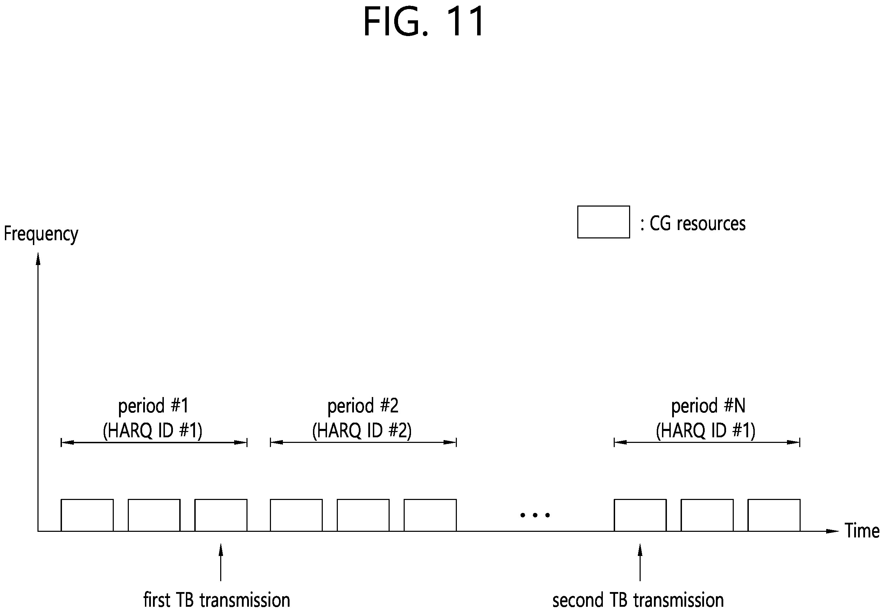

FIG. 11 shows an example in which a transmitting UE stops a timer related to a first transport block and transmits a second transport block, based on an embodiment of the present disclosure. The embodiment of FIG. 11 may be combined with various embodiments of the present disclosure.

Referring to FIG. 11, the transmitting UE may be allocated CG resources from a base station. For example, the allocated CG resources may include three resources within one period. For example, the allocated CG resources may be resources based on the period #1 to the period #(N-1). For example, the set of periods of the CG resources configured for the transmitting UE may include the period #1 to the period #(N-1). For example, there may be a HARQ process ID mapped for each period related to CG resources. The base station may indicate the HARQ process ID for each period related to the CG resource to the transmitting UE through a PDCCH.

For example, a HARQ process ID mapped to the period #1 indicated by the base station to the transmitting UE may be HARQ ID #1, and a HARQ process ID mapped to the period #2 indicated by the base station to the transmitting UE may be HARQ ID #2. For example, the period #1 may correspond to the first period of FIG. 10. For example, the HARQ ID #1 may be mapped with a first HARQ process ID related to SL transmission of the transmitting UE. In this case, the transmitting UE may transmit a first TB to the receiving UE by using CG resources within the period #1. Thereafter, the transmitting UE may receive SL HARQ NACK for the first TB from the receiving UE. The transmitting UE may request DG resource(s) for retransmission of the first TB from the base station and may be allocated DG resource(s) for retransmission of the first TB from the base station. In this case, a HARQ process ID mapped to the DG resource(s) for retransmission of the first TB may be set identically to the HARQ ID #1.

For example, if the transmitting UE performs retransmission of the first TB in the period #N after the set of periods (e.g., the period #1 to the period #(N-1)) of CG resources configured for the transmitting UE, a HARQ process ID mapped to the period #N may be the HARQ ID #1. Herein, for example, the period #N may be the period # 1 repeated after passing the set of periods. For example, the period # N may be the second period of FIG. 10. That is, if the HARQ process ID related to transmission of the second TB and the HARQ process ID related to retransmission of the first TB are the same, the transmitting UE may flush a HARQ buffer for the first TB related to retransmission. Thereafter, the transmitting UE may transmit the second TB in the period # N. In this case, for example, the transmitting UE may stop or not start the Uu DRX HARQ RTT TimerSL related to the first TB or the Uu DRX HARQ Retransmission TimerSL related to the first TB. For example, the transmitting UE may stop or not start the SL DRX HARQ RTT timer related to the first TB or the SL DRX HARQ retransmission timer related to the first TB. For example, the transmitting UE may transmit a message related to sidelink wake up to the receiving UE, and the receiving UE may stop or not start the SL DRX HARQ RTT timer, the SL DRX HARQ retransmission timer, or the SL DRX inactivity timer.

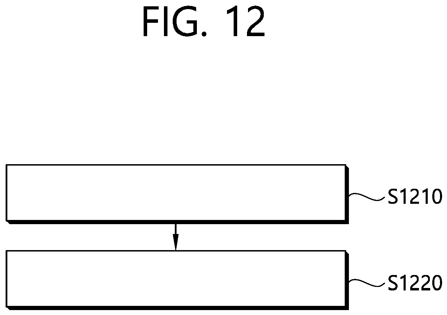

FIG. 12 shows a method for stopping a timer related to a first transport block by a first device, based on an embodiment of the present disclosure. The embodiment of FIG. 12 may be combined with various embodiments of the present disclosure.

Referring to FIG. 12, in step S 1210, the first device 100 may receive information related to configured grant (CG) from the base station. For example, the information related to the CG may include information related to a hybrid automatic repeat request (HARQ) process ID for the CG and period information of resources related to the CG.

In step S 1220, the first device 100 may transmit a first transport block to the second device 200 in a first period based on the period information and the first HARQ process ID. For example, based on that transmission of the first transport block is failed and the first HARQ process ID is the same as a second HARQ process ID, the first device 100 may stop a discontinuous reception (DRX) timer related to the first transport block in a second period related to the second HARQ process ID. For example, DRX related to the first transport block may include DRX between the first device 100 and the base station and DRX between the first device 100 and the second device 200. For example, the failure of the transmission of the first transport block may be that the first device 100 receives SL HARQ NACK for the first transport block from the second device 200.

For example, the first device 100 may transmit, to the second device 200, the first transport block based on the first HARQ process ID in the first period, based on the period information and information related to a HARQ process ID for the CG.

For example, the second period may be a period for retransmitting the first transport block after the transmission of the first transport block is failed in the first period.

For example, the first HARQ process ID may be mapped with the HARQ process ID for the CG related to the first period. For example, after the transmission of the first transport block fails, retransmission of the first transport block in the second period may be based on the same ID as the HARQ process ID for the CG related to the first period.

For example, the first device 100 may request a dynamic grant (DG) resource related to retransmission of the first transport block from the base station, based on the failure of the transmission of the first transport block. For example, the first device 100 may receive the DG resource related to retransmission of the first transport block from the base station. For example, a HARQ process ID related to the DG resource may be related to the first HARQ process ID.

For example, the first device 100 may transmit a message related to sidelink wake up to the second device 200. For example, the first device 100 may transmit the second transport block to the second device 200.

For example, the DRX timer related to the first transport block may include a HARQ round-trip time (RTT) timer related to Uu DRX between the first device 100 and the base station or a HARQ DRX retransmission timer related to Uu DRX between the first device 100 and the base station.

For example, the DRX timer related to the first transport block may include an SL DRX RTT timer between the first device 100 and the second device 200, an SL DRX retransmission timer between the first device 100 and the second device 200 or an SL DRX inactivity timer between the first device 100 and the second device 200.

For example, based on that the transmission of the first transport block is failed and the first HARQ process ID is the same as the second HARQ process ID, the first device 100 may transmit a message related to sidelink wake up to the second device 200. For example, the message related to sidelink wake up may be transmitted through L1 signaling, a MAC CE, or a PC5 RRC message. For example, based on the message related to sidelink wake up, the second device 200 may transition to a sleep mode related to SL DRX for the first device 100. For example, the message related to sidelink wake up may include at least one of the sidelink wake up indication message or the sidelink DRX command MAC CE.

For example, based on that the transmission of the first transport block is failed and the first HARQ process ID is the same as the second HARQ process ID, a HARQ buffer related to the first transport block may be flushed. For example, based on flushing of the HARQ buffer, a message informing that retransmission of the first transport block is not performed may be transmitted to the second device 200. For example, the message informing that retransmission of the first transport block is not performed may be transmitted through SCI, a MAC CE, or a PC5 RRC message. For example, based on the message informing that retransmission of the first transport block is not performed, the second device 200 may transition to a sleep mode related to SL DRX for the first device 100.

For example, based on the failure of the transmission of the first transport block, a resource for retransmitting the first transport block may be allocated from the base station to the first device 100. For example, the first HARQ process ID may be determined based on information related to the HARQ process ID. For example, the first HARQ process ID may be related to the resource for retransmitting the first transport block.

For example, the second transport block may be related to the second HARQ process ID. For example, the second HARQ process ID may be determined based on information related to the HARQ process. For example, based on that the transmission of the first transport block is failed and the first HARQ process ID is the same as the second HARQ process ID, the first device 100 may transmit the second transport block to the second device 200 in the second period.

The above-described embodiment can be applied to various devices described below. For example, the processor 102 of the first device 100 may control the transceiver 106 to receive information related to configured grant (CG) from the base station. In addition, the processor 102 of the first device 100 may control the transceiver 106 to transmit the first transport block to the second device in the first period based on the period information and the first HARQ process ID.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: receive, from a base station, information related to configured grant (CG), the information related to the CG including information related to a hybrid automatic repeat request (HARQ) process ID for the CG and period information of resources related to the CG; and transmit, to a second device, a first transport block in a first period, based on the period information and the first HARQ process ID. For example, based on that the transmission of the first transport block is failed and the first HARQ process ID is same as a second HARQ process ID, a discontinuous reception (DRX) timer related to the first transport block may be stopped in a second period related to the second HARQ process ID. For example, DRX related to the first transport block may include DRX between the first device and the base station and DRX between the first device and the second device.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: receive, from a base station, information related to configured grant (CG), the information related to the CG including information related to a hybrid automatic repeat request (HARQ) process ID for the CG and period information of resources related to the CG; and transmit, to a second UE, a first transport block in a first period, based on the period information and the first HARQ process ID. For example, based on that the transmission of the first transport block is failed and the first HARQ process ID is same as a second HARQ process ID, a discontinuous reception (DRX) timer related to the first transport block may be stopped in a second period related to the second HARQ process ID. For example, DRX related to the first transport block may include DRX between the first UE and the base station and DRX between the first UE and the second UE.

Based on an embodiment of the present disclosure, a non-transitory computer-readable storage medium storing instructions may be provided. For example, the instructions, when executed, may cause a first device to: receive, from a base station, information related to configured grant (CG), the information related to the CG including information related to a hybrid automatic repeat request (HARQ) process ID for the CG and period information of resources related to the CG; and transmit, to a second device, a first transport block in a first period, based on the period information and the first HARQ process ID. For example, based on that the transmission of the first transport block is failed and the first HARQ process ID is same as a second HARQ process ID, a discontinuous reception (DRX) timer related to the first transport block may be stopped in a second period related to the second HARQ process ID. For example, DRX related to the first transport block may include DRX between the first device and the base station and DRX between the first device and the second device.

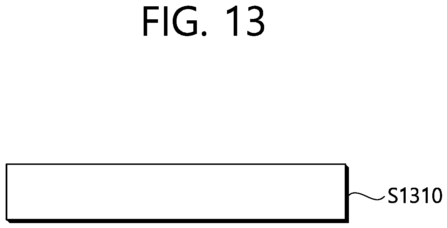

FIG. 13 shows a method for receiving, by a second device, a second transport block from a first device, based on an embodiment of the present disclosure. The embodiment of FIG. 13 may be combined with various embodiments of the present disclosure.

Referring to FIG. 13, in step S 1310, the second device 200 may receive a first transport block from the first device 100 in a first period. For example, the first device 100 may receive information related to configured grant (CG) from the base station. For example, the information related to the CG may include information related to a hybrid automatic repeat request (HARQ) process ID for the CG and period information of resources related to the CG. For example, based on the period information and a first HARQ process ID, the first transport block may be received in the first period. It may be transmitted to the second device 200. For example, based on that the transmission of the first transport block is failed and the first HARQ process ID is the same as a second HARQ process ID, a discontinuous reception (DRX) timer related to the first transport block may be stopped in a second period related to the second HARQ process ID. For example, DRX related to the first transport block may include DRX between the first device 100 and the base station and DRX between the first device 100 and the second device 200. For example, the failure of the transmission of the first transport block may be that the first device 100 receives SL HARQ NACK for the first transport block from the second device 200.

For example, the second device 200 may receive a message related to sidelink wake up from the first device 100. For example, the second device 200 may receive the second transport block from the first device 100.

For example, the DRX timer related to the first transport block may include a HARQ round-trip time (RTT) timer related to Uu DRX between the first device 100 and the base station or a HARQ DRX retransmission timer related to Uu DRX between the first device 100 and the base station.

For example, the DRX timer related to the first transport block may include an SL DRX RTT timer between the first device 100 and the second device 200, an SL DRX retransmission timer between the first device 100 and the second device 200, or an SL DRX inactivity timer between the first device 100 and the second device 200.

For example, based on that the transmission of the first transport block is failed and the first HARQ process ID is the same as the second HARQ process ID, a message related to sidelink wake up may be transmitted from the first device 100 to the second device 200. For example, the message related to sidelink wake up may be transmitted through L1 signaling, a MAC CE, or a PC5 RRC message. For example, based on the message related to sidelink wake up, the second device 200 may transition to a sleep mode related to SL DRX for the first device 100. For example, the message related to sidelink wake up may include at least one of the sidelink wake up indication message or the sidelink DRX command MAC CE.

For example, based on that the transmission of the first transport block is failed and the first HARQ process ID is the same as the second HARQ process ID, a HARQ buffer related to the first transport block may be flushed. For example, based on flushing of the HARQ buffer, a message informing that retransmission of the first transport block is not performed may be transmitted to the second device 200. For example, the message informing that retransmission of the first transport block is not performed may be transmitted through SCI, a MAC CE, or a PC5 RRC message. For example, based on the message informing that retransmission of the first transport block is not performed, the second device 200 may transition to a sleep mode related to SL DRX for the first device 100.

For example, based on the failure of the transmission of the first transport block, a resource for retransmitting the first transport block may be allocated from the base station to the first device 100. For example, the first HARQ process ID may be determined based on information related to the HARQ process ID. For example, the first HARQ process ID may be related to the resource for retransmitting the first transport block.

For example, the second transport block may be related to the second HARQ process ID. For example, the second HARQ process ID may be determined based on information related to the HARQ process. For example, based on that the transmission of the first transport block is failed and the first HARQ process ID is the same as the second HARQ process ID, the second transport block may be transmitted from the first device 100 to the second device 200 in the second period.

The above-described embodiment can be applied to various devices described below. For example, the processor 202 of the second device 200 may control the transceiver 206 to receive the first transport block from the first device 100 in the first period.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: receive, from a first device, a first transport block in a first period. For example, information related to configured grant (CG) may be received by the first device from a base station. For example, the information related to the CG may include information related to a hybrid automatic repeat request (HARQ) process ID for the CG and period information of resources related to the CG. For example, based on the period information and a first HARQ process ID, the first transport block may be received in the first period. For example, based on that transmission of the first transport block is failed and the first HARQ process ID is same as a second HARQ process ID, a discontinuous reception (DRX) timer related to the first transport block may be stopped in a second period related to the second HARQ process ID. For example, DRX related to the first transport block may include DRX between the first device and the base station and DRX between the first device and the second device.

Various embodiments of the present disclosure may be combined with each other.

Various embodiments of the present disclosure may be independently implemented. Alternatively, the various embodiments of the present disclosure may be implemented by being combined or merged. For example, although the various embodiments of the present disclosure have been described based on the 3GPP system for convenience of explanation, the various embodiments of the present disclosure may also be extendedly applied to another system other than the 3GPP system. For example, the various embodiments of the present disclosure may also be used in an uplink or downlink case without being limited only to direct communication between UEs. In this case, a base station, a relay node, or the like may use the proposed method according to various embodiments of the present disclosure. For example, it may be defined that information on whether to apply the method according to various embodiments of the present disclosure is reported by the base station to the UE or by a transmitting UE to a receiving UE through pre-defined signaling (e.g., physical layer signaling or higher layer signaling). For example, it may be defined that information on a rule according to various embodiments of the present disclosure is reported by the base station to the UE or by a transmitting UE to a receiving UE through pre-defined signaling (e.g., physical layer signaling or higher layer signaling).

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

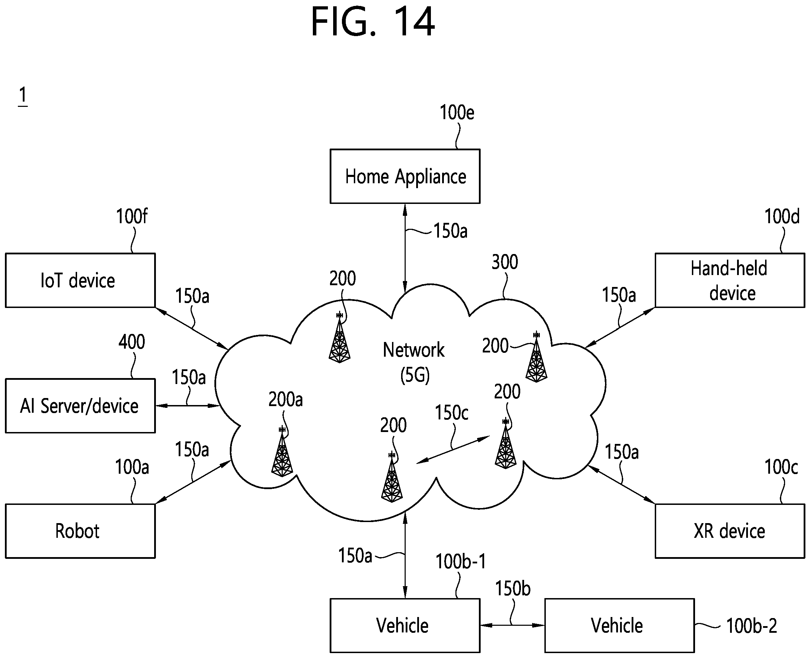

FIG. 14 shows a communication system 1, based on an embodiment of the present disclosure. The embodiment of FIG. 14 may be combined with various embodiments of the present disclosure.

Referring to FIG. 14, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

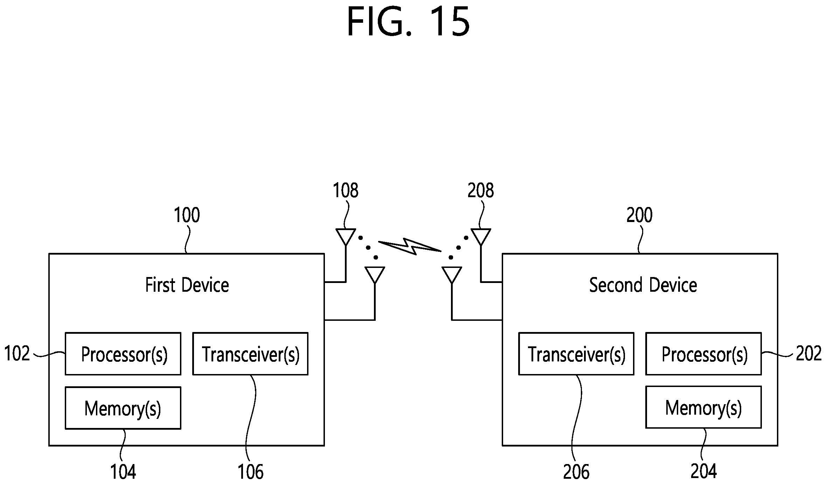

FIG. 15 shows wireless devices, based on an embodiment of the present disclosure. The embodiment of FIG. 15 may be combined with various embodiments of the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

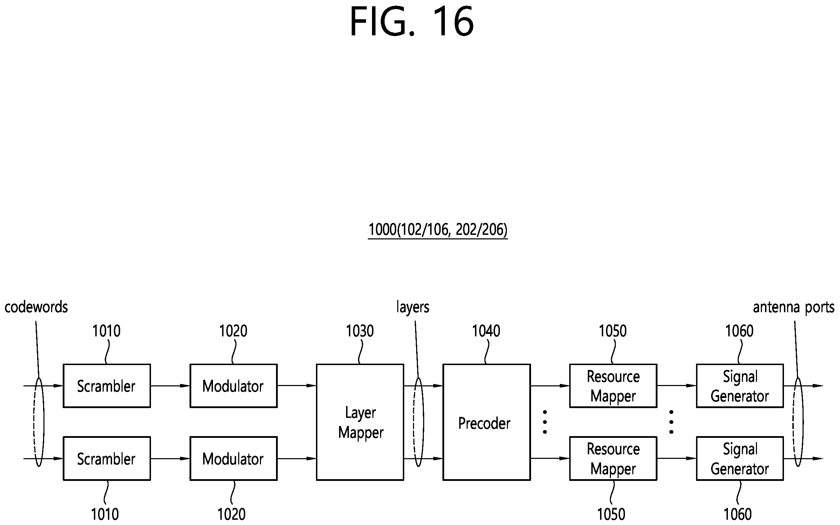

FIG. 16 shows a signal process circuit for a transmission signal, based on an embodiment of the present disclosure. The embodiment of FIG. 16 may be combined with various embodiments of the present disclosure.

Referring to FIG. 16, a signal processing circuit 1000 may include scramblers 1010, modulators 1020, a layer mapper 1030, a precoder 1040, resource mappers 1050, and signal generators 1060. An operation/function of FIG. 16 may be performed, without being limited to, the processors 102 and 202 and/or the transceivers 106 and 206 of FIG. 15. Hardware elements of FIG. 16 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 16. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 16. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

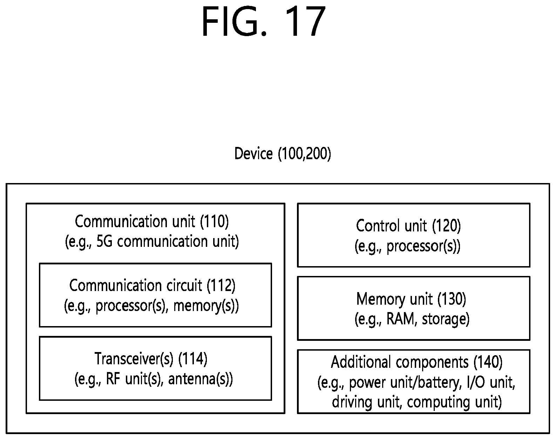

FIG. 17 shows another example of a wireless device, based on an embodiment of the present disclosure. The wireless device may be implemented in various forms according to a use-case/service (refer to FIG. 14). The embodiment of FIG. 17 may be combined with various embodiments of the present disclosure.

Referring to FIG. 17, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 17 will be described in detail with reference to the drawings.

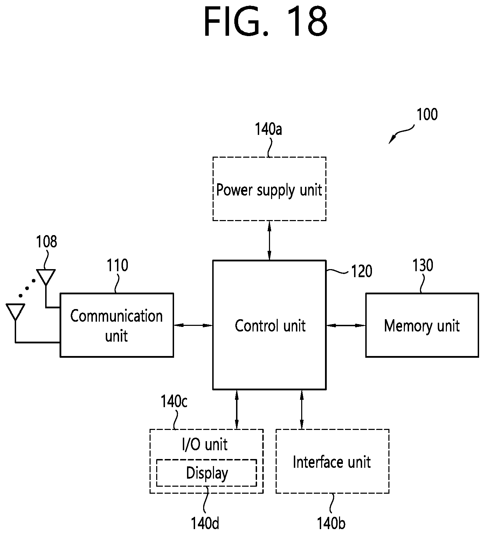

FIG. 18 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 18 may be combined with various embodiments of the present disclosure.

Referring to FIG. 18, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 17, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

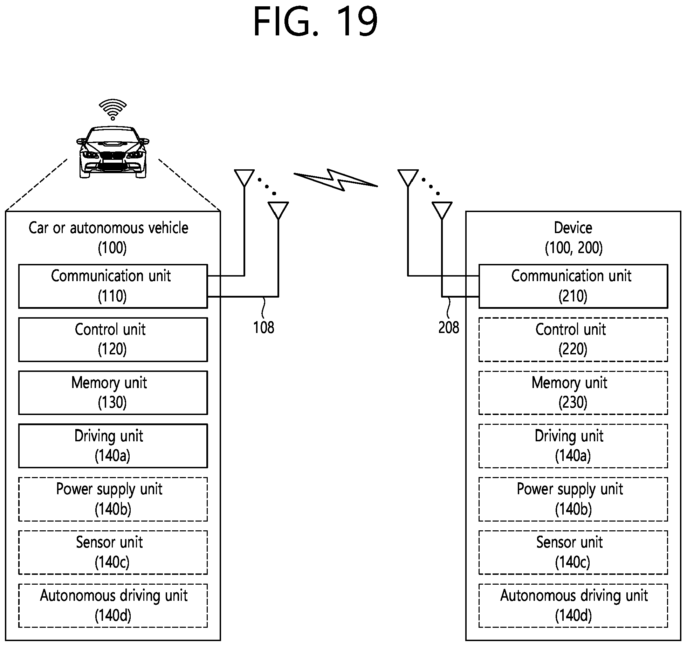

FIG. 19 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 19 may be combined with various embodiments of the present disclosure.

Referring to FIG. 19, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

   receiving, from a base station, information related to configured grant (CG), the information related to the CG including information related to a hybrid automatic repeat request (HARQ) process ID for the CG and period information of resources related to the CG; and
   transmitting, to a second device, a first transport block in a first period, based on the period information and the first HARQ process ID,
   wherein, based on that the transmission of the first transport block is failed and the first HARQ process ID is same as a second HARQ process ID, a discontinuous reception (DRX) timer related to the first transport block is stopped in a second period related to the second HARQ process ID, and
   wherein DRX related to the first transport block includes DRX between the first device and the base station and DRX between the first device and the second device.

2. The method of claim 1, wherein the DRX timer related to the first transport block includes a HARQ round-trip time (RTT) timer related to Uu DRX between the first device and the base station or a HARQ DRX retransmission timer related to Uu DRX between the first device and the base station.

3. The method of claim 1, wherein the DRX timer related to the first transport block includes a sidelink (SL) DRX RTT timer between the first device and the second device, an SL DRX retransmission timer between the first device and the second device, or an SL DRX inactivity timer between the first device and the second device.

4. The method of claim 1, wherein, based on that the transmission of the first transport block is failed and the first HARQ process ID is the same as the second HARQ process ID, a message related to sidelink wake up is transmitted to the second device.

5. The method of claim 4, wherein the message related to sidelink wake up is transmitted through layer 1 (L1) signaling, a medium access control (MAC) control element (CE), or a PCS radio resource control (RRC) message.

6. The method of claim 4, wherein, based on the message related to sidelink wake up, the second device transitions to a sleep mode related to SL DRX for the first device.

7. The method of claim 1, wherein, based on that the transmission of the first transport block is failed and the first HARQ process ID is the same as the second HARQ process ID, a HARQ buffer related to the first transport block is flushed.

8. The method of claim 7, wherein, based on the flushing of the HARQ buffer, a message informing that retransmission of the first transport block is not performed is transmitted to the second device.

9. The method of claim 8, wherein the message informing that retransmission of the first transport block is not performed is transmitted through sidelink control information (SCI), a MAC CE, or a PCS RRC message.

10. The method of claim 9, wherein, based on the message informing that retransmission of the first transport block is not performed, the second device transitions to a sleep mode related to SL DRX for the first device.

11. The method of claim 1, wherein, based on the failure of the transmission of the first transport block, a resource for retransmitting the first transport block is allocated from the base station to the first device,

    wherein the first HARQ process ID is determined based on information related to the HARQ process ID, and
    wherein the first HARQ process ID is related to the resource for retransmitting the first transport block.

12. The method of claim 1, wherein the second transport block is related to the second HARQ process ID, and
    wherein the second HARQ process ID is determined based on information related to the HARQ process.

13. The method of claim 12, wherein, based on that the transmission of the first transport block is failed and the first HARQ process ID is the same as the second HARQ process ID, the second transport block is transmitted in the second period.

**14.** A first device adapted to perform wireless communication, the first device comprising:

one or more memories storing instructions;
one or more transceivers; and
one or more processors connected to the one or more memories and the one or more transceivers, wherein the one or more processors execute the instructions to:

receive, from a base station, information related to configured grant (CG), the information related to the CG including information related to a hybrid automatic repeat request (HARQ) process ID for the CG and period information of resources related to the CG; and
transmit, to a second device, a first transport block in a first period, based on the period information and the first HARQ process ID,
wherein, based on that the transmission of the first transport block is failed and the first HARQ process ID is same as a second HARQ process ID, a discontinuous reception (DRX) timer related to the first transport block is stopped in a second period related to the second HARQ process ID, and
wherein DRX related to the first transport block includes DRX between the first device and the base station and DRX between the first device and the second device.

**15.** An apparatus adapted to control a first user equipment (UE), the apparatus comprising:

one or more processors; and
one or more memories operably connected to the one or more processors and storing instructions, wherein the one or more processors execute the instructions to:

receive, from a base station, information related to configured grant (CG), the information related to the CG including information related to a hybrid automatic repeat request (HARQ) process ID for the CG and period information of resources related to the CG; and
transmit, to a second UE, a first transport block in a first period, based on the period information and the first HARQ process ID,
wherein, based on that the transmission of the first transport block is failed and the first HARQ process ID is same as a second HARQ process ID, a discontinuous reception (DRX) timer related to the first transport block is stopped in a second period related to the second HARQ process ID, and
wherein DRX related to the first transport block includes DRX between the first UE and the base station and DRX between the first UE and the second UE.

**16.** A non-transitory computer-readable storage medium storing instructions that, when executed, cause a first device to:

receive, from a base station, information related to configured grant (CG), the information related to the CG including information related to a hybrid automatic repeat request (HARQ) process ID for the CG and period information of resources related to the CG; and
transmit, to a second device, a first transport block in a first period, based on the period information and the first HARQ process ID,
wherein, based on that the transmission of the first transport block is failed and the first HARQ process ID is same as a second HARQ process ID, a discontinuous reception (DRX) timer related to the first transport block is stopped in a second period related to the second HARQ process ID, and
wherein DRX related to the first transport block includes DRX between the first device and the base station and DRX between the first device and the second device.

**17.** A method for performing wireless communication by a second device, the method comprising:

receiving, from a first device, a first transport block in a first period,
wherein information related to configured grant (CG) is received by the first device from a base station,
wherein the information related to the CG includes information related to a hybrid automatic repeat request (HARQ) process ID for the CG and period information of resources related to the CG,
wherein, based on the period information and a first HARQ process ID, the first transport block is received in the first period,
wherein, based on that transmission of the first transport block is failed and the first HARQ process ID is same as a second HARQ process ID, a discontinuous reception (DRX) timer related to the first transport block is stopped in a second period related to the second HARQ process ID, and
wherein DRX related to the first transport block includes DRX between the first device and the base station and DRX between the first device and the second device.

18. The method of claim 17, wherein the DRX timer related to the first transport block includes a HARQ round-trip time (RTT) timer related to Uu DRX between the first device and the base station or a HARQ DRX retransmission timer related to Uu DRX between the first device and the base station.

19. A second device adapted to perform wireless communication, the second device comprising:

   one or more memories storing instructions;
   one or more transceivers; and
   one or more processors connected to the one or more memories and the one or more transceivers, wherein the one or more processors execute the instructions to:

      receive, from a first device, a first transport block in a first period,
      wherein information related to configured grant (CG) is received by the first device from a base station,
      wherein the information related to the CG includes information related to a hybrid automatic repeat request (HARQ) process ID for the CG and period information of resources related to the CG,
      wherein, based on the period information and a first HARQ process ID, the first transport block is received in the first period,
      wherein, based on that transmission of the first transport block is failed and the first HARQ process ID is same as a second HARQ process ID, a discontinuous reception (DRX) timer related to the first transport block is stopped in a second period related to the second HARQ process ID, and
      wherein DRX related to the first transport block includes DRX between the first device and the base station and DRX between the first device and the second device.

20. The second device of claim 19, wherein the DRX timer related to the first transport block includes a HARQ round-trip time (RTT) timer related to Uu DRX between the first device and the base station or a HARQ DRX retransmission timer related to Uu DRX between the first device and the base station.

# FIG. 1

# FIG. 2

(a)

(b)

(c)

PC5-U

(d)

PC5-C

EP 4 243 541 A1

# FIG. 3

・・・  | One Frame (10ms) |  ・・・

・・・  | Half-Frame (5ms) | | Half-Frame (5ms) |  ・・・

・・・ | Subframe 0 (1ms) | ・・・ | Subframe 4 (1ms) | | Subframe 5 (1ms) | ・・・ | Subframe 9 (1ms) | ・・・

Subframe (1ms)

| 15KHz | Slot 0 (14symbols) |

1ms

| 30KHz | Slot 0 (14symbols) | Slot 1 |

500us

| 60KHz | Slot 0 (14symbols) | Slot 1 | Slot 2 | Slot 3 |

250us

| 120KHz | Slot 0 (14symbols) | Slot 1 | Slot 2 | Slot 3 | Slot 4 | Slot 5 | Slot 6 | Slot 7 |

125us

# FIG. 4

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 243 541 A1

# FIG. 5

PRB N3

PRB 1
PRB 0

$N^{size}_{BWP, 2}$

PRB N2

PRB 1
PRB 0

$N^{size}_{BWP, 1}$

PRB N1

PRB 1
PRB 0

$N^{size}_{BWP, 0}$

$N^{start}_{BWP, 2}$

$N^{start}_{BWP, 1}$

$N^{start}_{BWP, 0}$

Carrier
Bandwidth

CRB 0

Freq.

Time

PRB 0 (Point A) in reference resource block

# FIG. 6

(a)                                    (b)

# FIG. 7

(a)                    (b)                    (c)

●: TX UE
⊘: RX UE

# FIG. 8

In case of receiving NACK from RX UE despite using the last SL CG resource, TX UE receives SL DG resources from base station and performs sidelink retransmission

SL CG Period
(HARQ Process ID #1)

SL CG Period
(HARQ Process ID #2)

SL CG Period
(HARQ Process ID #3)

SL CG Period
(HARQ Process ID #N)

In case of occurring the same HARQ Process ID #1 again, TX UE flushes TB being retransmitted using SL DG from HARQ buffer. Also, if Sidelink DRX Retransmission timer (or timer for sidelink DRX operation) is running, it is necessary to define how to perform timer operation.

↑ : SL CG Resources

↑ : SL CG Resources for sidelink retransmission

EP 4 243 541 A1

# FIG. 9

In case of receiving NACK from RX UE despite using the last SL CG resource, TX UE receives SL DG resources from base station and performs sidelink retransmission

SL CG Period
(HARQ Process ID #1)

SL CG Period
(HARQ Process ID #2)

SL CG Period
(HARQ Process ID #3)

. . .

SL CG Period
(HARQ Process ID #N)

↑ : SL CG Resources

↑ : SL CG Resources for sidelink retransmission

1. flush TB being retransmitted using SL DG resources from HARQ buffer
2. stop Uu DRX Retransmission Timer (or timer for operating in active mode)
3. transition to sleep mode

EP 4 243 541 A1

# FIG. 10

| BS | TX UE | RX UE |

information related to CG — S1010

first transport block — S1020

stop timer
related to first transport block — S1030

message related to sidelink wake up — S1040

second transport block — S1050

# FIG. 11

# FIG. 12

S1210

S1220

# FIG. 13

S1310

# FIG. 14

# FIG. 15

EP 4 243 541 A1

# FIG. 16

1000(102/106, 202/206)

# FIG. 17

Device (100,200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 18

# FIG. 19

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

208

EP 4 243 541 A1

## INTERNATIONAL SEARCH REPORT

| International application No. |
| --- |
| **PCT/KR2021/015984** |

**A.     CLASSIFICATION OF SUBJECT MATTER**

**H04W 72/14**(2009.01)i; **H04W 72/12**(2009.01)i; **H04L 1/18**(2006.01)i; **H04W 52/02**(2009.01)i; **H04W 76/28**(2018.01)i; **H04W 4/40**(2018.01)i; **H04W 92/18**(2009.01)i

According to International Patent Classification (IPC) or to both national classification and IPC

**B.     FIELDS SEARCHED**

Minimum documentation searched (classification system followed by classification symbols)

H04W 72/14(2009.01); H04L 1/18(2006.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: V2X(vehicle-to-everything), CG(configured grant), HARQ 프로세스 ID(hybrid automatic repeat process ID), 주기(period), 전송 블록(transmission block), DRX 타이머(discontinuous reception timer), 중단(stop)

**C.     DOCUMENTS CONSIDERED TO BE RELEVANT**

| Category* | Citation of document, with indication, where appropriate, of the relevant passages | Relevant to claim No. |
| --- | --- | --- |
| A | HUAWEI et al. Discussion on remaining MAC open issues for 5G V2X with NR SL. R2-2005492, 3GPP TSG RAN WG2 Meeting #110-e. 22 May 2020.<br>    See sections 2.10 and 3.2. | 1-20 |
| A | LG ELECTRONICS INC. Summary of MAC open issues for NR sidelink. R2-2003757, 3GPP TSG RAN WG2 #109bis-e. 01 May 2020.<br>    See pages 1-33. | 1-20 |
| A | HUAWEI et al. Discussion on remaining MAC open issues for 5G V2X with NR SL. R2-2003555, 3GPP TSG RAN WG2 #109bis-e. 10 April 2020.<br>    See sections 1-3.3. | 1-20 |
| A | US 2020-0313808 A1 (LG ELECTRONICS INC.) 01 October 2020 (2020-10-01)<br>    See paragraphs [0075]-[0185]; and figures 1-11. | 1-20 |
| A | WO 2020-130755 A1 (LG ELECTRONICS INC.) 25 June 2020 (2020-06-25)<br>    See paragraphs [0076]-[0829]; and figures 1-40. | 1-20 |

☐ Further documents are listed in the continuation of Box C.         ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 January 2022** | **27 January 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/015984**

| Patent document cited in search report | | | Publication date (day/month/year) | Patent family member(s) | | | Publication date (day/month/year) |
|---|---|---|---|---|---|---|---|
| US | 2020-0313808 | A1 | 01 October 2020 | None | | | |
| WO | 2020-130755 | A1 | 25 June 2020 | CN | 113228800 | A | 06 August 2021 |
| | | | | EP | 3879912 | A1 | 15 September 2021 |

Form PCT/ISA/210 (patent family annex) (July 2019)